(19) Europäisches Patentamt
European Patent Office
Office européen des brevets

(11) **EP 3 306 301 B1**

(12) **EUROPEAN PATENT SPECIFICATION**

(45) Date of publication and mention
of the grant of the patent:
**09.04.2025 Bulletin 2025/15**

(21) Application number: **16807178.5**

(22) Date of filing: **23.03.2016**

(51) International Patent Classification (IPC):
**G01N 5/02** (2006.01)   **G01N 27/02** (2006.01)
**G01N 29/02** (2006.01)   **G01N 29/036** (2006.01)
**F24D 17/02** (2006.01)   **F24D 19/00** (2006.01)

(52) Cooperative Patent Classification (CPC):
**G01N 5/02; F24D 17/02; F24D 19/0092;**
**G01N 27/02; G01N 29/022; G01N 29/036;**
G01N 2291/014; G01N 2291/0256;
G01N 2291/0258

(86) International application number:
**PCT/JP2016/059084**

(87) International publication number:
**WO 2016/199471 (15.12.2016 Gazette 2016/50)**

(54) **FOREIGN MATERIAL DETECTION DEVICE AND FOREIGN MATERIAL DETECTION METHOD**

VORRICHTUNG ZUR ERKENNUNG VON FREMDSTOFFEN UND VERFAHREN ZUR ERKENNUNG VON FREMDSTOFFEN

DISPOSITIF DE DÉTECTION DE MATÉRIAU ÉTRANGER ET PROCÉDÉ DE DÉTECTION DE MATÉRIAU ÉTRANGER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2015 JP 2015115969**

(43) Date of publication of application:
**11.04.2018 Bulletin 2018/15**

(73) Proprietor: **Mitsubishi Electric Corporation**
**Chiyoda-ku**
**Tokyo 100-8310 (JP)**

(72) Inventors:
• **TAKATA, Makoto**
**Tokyo 100-8310 (JP)**
• **YASUNAGA, Nozomu**
**Tokyo 100-8310 (JP)**

(74) Representative: **Meissner Bolte Partnerschaft mbB**
**Patentanwälte Rechtsanwälte**
**Postfach 86 06 24**
**81633 München (DE)**

(56) References cited:
WO-A1-01/31329        JP-A- 2005 043 123
JP-A- 2006 010 431     JP-A- 2007 271 545
JP-A- H07 301 590      JP-A- H09 126 979
US-A- 3 056 284        US-A- 5 852 229
US-A1- 2003 024 316    US-A1- 2003 033 870
US-A1- 2009 173 158    US-A1- 2011 303 012

**EP 3 306 301 B1**

**Description**

Technical Field

The present invention relates to a foreign substance detection device and a foreign substance detection method, for detecting a foreign substance adhered inside a pipe.

Background Art

Heat-pump-type heat exchangers using refrigerant are used in hot-water supply devices, water heaters, air conditioning apparatus, and other such devices. In recent years, heat exchange systems using, as its refrigerant, $CO_2$, which has a high heat exchange rate, have been commonly used in heat exchangers. A hot-water supply system, such as a heat-pump-type hot-water supply device, stores clean water (tap water) in a hot-water storage tank, and causes the water stored in the hot-water storage tank to repeatedly circulate through the heat exchange system to obtain boiling water.

In such a system, a foreign substance called scale, which forms due to the quality of water used, is generated inside the pipes of the hot-water supply device or other such devices, and is adhered on the inner surface of the pipes. Scale may be peeled from and reattached to the inside of a pipe, thereby causing clogging of a flow path of the pipe, and such clogging may cause failures in hot-water supply device or other such devices. For this reason, it is necessary to prevent failures due to scale by detecting scale adhered inside a pipe.

In Patent Literature 1, there is disclosed an apparatus configured to receive reflected waves of ultrasonic waves emitted from the outside of a pipe to the inside thereof to measure the thickness of scale adhered on an inner surface of the pipe. In Patent Literature 1, the inside of the pipe is filled with water, and, by receiving reflected waves reflected at a boundary between an inner wall of the pipe and scale and reflected waves reflected at a boundary between the scale and the water, a foreign substance, such as scale, is detected, and the thickness of the foreign substance is measured.

In Patent Literature 2, there is disclosed an apparatus configured to measure the thickness of scale on the basis of detection signals from an ultrasonic transceiver unit mounted on a pipe. In Patent Literature 2, by detecting a change in the strength of second- or higher-order harmonic spectrum, a foreign substance, such as scale, is detected, and the thickness of the foreign substance is measured.

Patent application US2011303012A1 discloses an apparatus for measuring the thickness of a deposit of material on the an inner wall of a pipe, the apparatus comprising: a device adapted to give a mechanical impulse to the pipe, a sensor placeable on the outside of the pipe for detecting vibrations in the pipe; a signal processor for determining a resonance frequency of the pipe based on the vibrations detected by the sensor means; and an analyser for determining the thickness of a deposit of material on the inner wall of the pipe based on the resonance frequency determined by said signal processor.

International application WO0131329A1 discloses a monitoring apparatus to monitor a deposit inside a pipe, it comprises an acoustic device adapted to operate in a resonance mode at a frequency of 10-250 kHz, and a power supply adapted to supply the monitor with electrical energy. The acoustic device can be placed inside a pipe and includes a monitoring surface directly exposed to fluids prone to causing deposition of materials. The deposition of material on the monitoring surface is monitored by measuring a change in resonance frequency of the acoustic device.

Citation List

Patent Literature

| | |
|---|---|
| Patent Literature 1: | Japanese Unexamined Patent Application Publication JP Hei 9-287 937 A |
| Patent Literature 2: | Japanese Unexamined Patent Application Publication JP 2007-010 543 A |

Summary of the Invention

Technical Problem

However, the measurement apparatus disclosed in Patent Literature 1 receives ultrasonic waves that have been reflected multiple times inside the pipe, and as a result, the accuracy in measurement is lowered. Further, the measurement apparatus disclosed in Patent Literature 2 measures a change in the strength of high-order harmonic spectrum. For this reason, when a foreign substance having low acoustic impedance, such as a soft foreign substance, is adhered inside a pipe, the difference in the strength of high-order harmonic spectrum is hardly obtained. Consequently, in Patent Literature 2, it is difficult to detect a foreign substance having low acoustic impedance.

The present invention has been made to solve the above-mentioned problems, and has an object to provide a foreign substance detection device and a foreign substance detection method, which are capable of detecting a foreign substance with high measurement accuracy.

Solution to the Problem

A foreign substance detection device according to the present invention is disclosed in independent claims 1 and 5; preferred embodiments are disclosed in dependent claims 2-4, 6-9.

Advantageous Effects of Invention

According to the one embodiment of the present invention, adhesion of a foreign substance inside a pipe is detected on the basis of the impedance of the electromechanical conversion element. The impedance of the electromechanical conversion element varies depending on a mass load. In this way, a foreign substance is detected on the basis of the mass load, and thus the foreign substance can be detected with high accuracy.

Brief Description of Drawings

FIG. 1      is a schematic diagram for illustrating a foreign substance detection device 100 according to Embodiment 1 of the present invention.

FIG. 2      is a perspective view for illustrating the foreign substance detection device 100 according to Embodiment 1 of the present invention.

FIG. 3      is a schematic diagram for illustrating a piezoelectric element 12 in Embodiment 1 of the present invention.

FIG. 4      is a graph for showing a relationship between an applied voltage and an vibration amplitude of the piezoelectric element 12 in Embodiment 1 of the present invention.

FIG. 5      is a schematic diagram for illustrating a structure that allows the piezoelectric element 12 to operate at low frequency in Embodiment 1 of the present invention.

FIG. 6      is an equivalent circuit diagram of the piezoelectric element 12 in Embodiment 1 of the present invention.

FIG. 7      is a graph for showing frequency characteristics of impedance of the piezoelectric element 12 in Embodiment 1 of the present invention.

FIG. 8      is a graph for showing frequency characteristics of admittance of the piezoelectric element 12 in Embodiment 1 of the present invention.

FIG. 9      is a graph for showing frequency characteristics of a phase difference of the piezoelectric element 12 in Embodiment 1 of the present invention.

FIG. 10      is a vector diagram for illustrating an impedance Z in Embodiment 1 of the present invention.

FIG. 11      is a graph for showing frequency characteristics of the impedance of the piezoelectric element 12 when spurious occurs in Embodiment 1 of the present invention.

FIG. 12      is a graph for showing frequency characteristics of the phase difference of the piezoelectric element 12 when spurious occurs in Embodiment 1 of the present invention.

FIG. 13      is a graph for showing frequency characteristics of the impedance of the piezoelectric element 12 with different mass loads in Embodiment 1 of the present invention.

FIG. 14      is a graph for showing a relationship between an adhesion amount of a foreign substance 2 and the impedance of the piezoelectric element 12 in Embodiment 1 of the present invention.

FIG. 15      is a circuit diagram for illustrating Example 1 of application of the foreign substance detection device 100 to a hot-water supply device 31 in Embodiment 1 of the present invention.

FIG. 16      is a circuit diagram for illustrating Example 2 of the application of the foreign substance detection device 100 in Embodiment 1 of the present invention to the hot-water supply device 31.

FIG. 17      is a circuit diagram for illustrating an example of application of the foreign substance detection device 100 in Embodiment 1 of the present invention to a cooler 40.

FIG. 18      is a perspective view for illustrating a foreign substance detection device 100 according to a first modification example of Embodiment 1 of the present invention.

FIG. 19      is a perspective view for illustrating a foreign substance detection device 100 according to a second modification example of Embodiment 1 of the present invention.

FIG. 20      is a perspective view for illustrating a foreign substance detection device 100 according to a third modification example of Embodiment 1 of the present invention.

FIG. 21    is a perspective view for illustrating a foreign substance detection device 100 according to a fourth modification example of Embodiment 1 of the present invention.

FIG. 22    is a schematic diagram for illustrating a foreign substance detection device 200 according to Embodiment 2 of the present invention.

FIG. 23    is a graph for showing a relationship between an amount of change in impedance of a piezoelectric element 12 and an adhesion amount of a foreign substance 2 in Embodiment 2 of the present invention.

FIG. 24    is a schematic diagram for illustrating a foreign substance detection device 300 according to Embodiment 3 of the present invention.

FIG. 25    is a circuit diagram for illustrating a hot-water supply device 31 in Embodiment 3 of the present invention.

FIG. 26    is a schematic diagram for illustrating a foreign substance detection device 400 according to Embodiment 4 of the present invention.

Description of Embodiments

A foreign substance detection device and a foreign substance detection method according to embodiments of the present invention are described below with reference to the drawings.

Embodiment 1

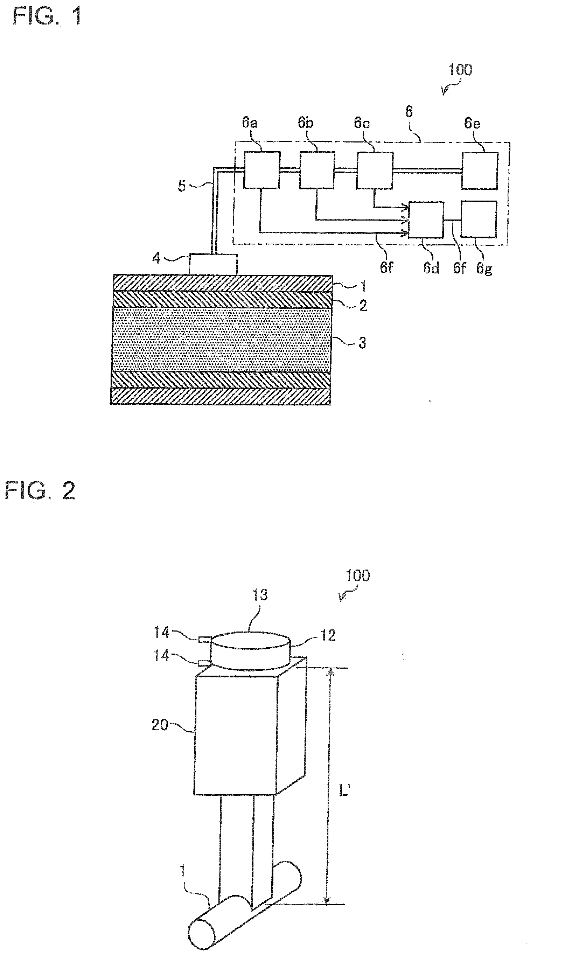

FIG. 1 is a schematic diagram for illustrating a foreign substance detection device 100 according to Embodiment 1 of the present invention. The foreign substance detection device 100 is described with reference to FIG. 1. As illustrated in FIG. 1, the foreign substance detection device 100 includes an electromechanical conversion element 4 and a foreign substance detection unit 6. The electromechanical conversion element 4 is attached to a pipe 1, and is configured to convert energy electric energy to mechanical energy and convert mechanical energy to electric energy.

As the electromechanical conversion element 4, a piezoelectric element 12 is employed; in an example which does not form part of the present invention a crystal oscillator, a ferrite oscillator, or another element is used. The electromechanical conversion element 4 and the foreign substance detection unit 6 are connected by a signal line 5, and transmit and receive signals to and from each other via the signal line 5.

FIG. 2 is a perspective view for illustrating the foreign substance detection device 100 according to Embodiment 1 of the present invention. As illustrated in FIG. 2, the foreign substance detection device 100 includes an attachment 20, and the piezoelectric element 12, which serves as the electromechanical conversion element 4, is attached to the pipe 1 by using the attachment 20. The piezoelectric element 12 is one example of the electromechanical conversion element 4.

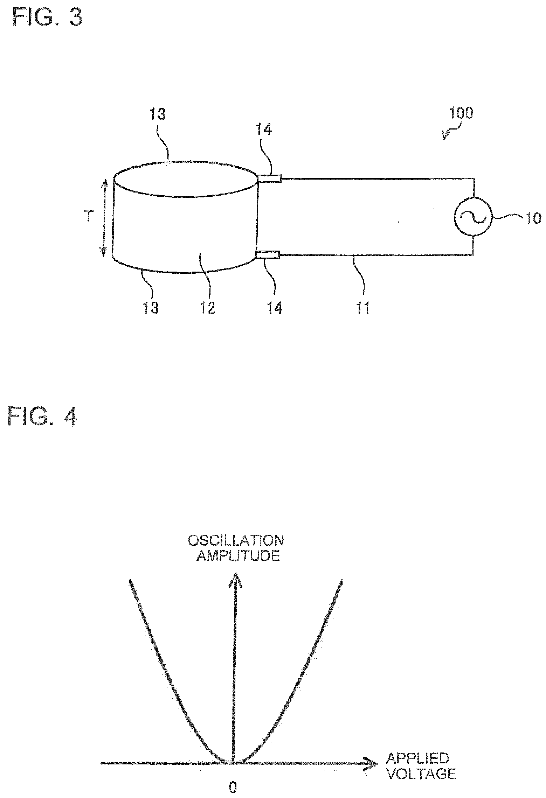

In Embodiment 1, the attachment 20 is formed of a part that is formed into a rectangular parallelepiped shape and connected to the piezoelectric element 12, and a part that is formed into a rectangular parallelepiped shape and connected to the pipe 1. Both end surfaces of the piezoelectric element 12 are vibration surfaces 13, and each vibration surface 13 is provided with an electrode 14 to which a power source 10 (see FIG. 3) is connected. In addition, the signal line 5 is attached to the piezoelectric element 12.

FIG. 3 is a schematic diagram for illustrating the piezoelectric element 12 in Embodiment 1 of the present invention. As illustrated in FIG. 3, in Embodiment 1, the piezoelectric element 12 is used as the electromechanical conversion element 4. The piezoelectric element 12 is formed into, for example, a cylindrical shape, and both end surfaces thereof are the vibration surfaces 13. Each end surface is provided with the electrode 14, and an alternating-current (AC) voltage is applied between the electrodes 14 from the power source 10 via an electric wire 11.

FIG. 4 is a graph for showing a relationship between an applied voltage and a vibration amplitude of the piezoelectric element 12 in Embodiment 1 of the present invention. In FIG. 4, the horizontal axis indicates the applied voltage, and the vertical axis indicates the vibration amplitude. As shown in FIG. 4, when the applied voltage changes, the vibration amplitude also changes, and when an AC voltage is applied, the piezoelectric element 12 performs a contraction movement such that the vibration surfaces 13 vibrate to convert electric energy into mechanical energy.

This phenomenon is called "piezoelectric effect". At this moment, the vibration frequency of the vibration surfaces 13 of the piezoelectric element 12 is determined by the frequency of the AC voltage. Meanwhile, when an external force is applied to the vibration surfaces 13 of the piezoelectric element 12, thereby causing the vibration surfaces 13 to vibrate, an electromotive force is generated in the piezoelectric element 12. This phenomenon is called "reverse piezoelectric effect". At this moment, the frequency of the electromotive force generated in the piezoelectric element 12 is determined by the vibration frequency of the vibration surfaces 13 of the piezoelectric element 12.

Such a piezoelectric element 12 has become widespread, and, for example, lead zirconate titanate or polyvinylidene fluoride (PVDF), which is resin, is used as the material thereof. The piezoelectric element 12 has a heat resistant temperature of 80 degrees C or higher, and thus can be used even in a high temperature environment. In addition, the piezoelectric element 12 is small in size and simple in handling, and has excellent temperature characteristics and electric characteristics.

The frequency at which the piezoelectric element 12 is most likely to vibrate is determined by the size of the piezoelectric element 12. When the thickness of the piezoelectric element 12 in an expansion/contraction direction is represented by T, the frequency at which vibration is most likely to occur is represented by f, and the speed of sound passing through the piezoelectric element 12 is represented by C, the following Expression (1) is established. N is a natural number.

$$f=C/(2T)\times N \qquad \ldots(1)$$

When the piezoelectric element 12 is driven with a frequency f at which the piezoelectric element 12 is most likely to vibrate, the energy conversion efficiency in converting electric energy into mechanical (vibration) energy increases. In this case, the frequency f at which vibration is most likely to occur is called "resonance frequency". In the Expression (1), the resonance frequency f when N is 1 is called "fundamental frequency".

When N is 1, the thickness T of the piezoelectric element 12 and the half-wavelength of the fundamental frequency are the same, and the energy conversion efficiency in converting electric energy into mechanical energy becomes the maximum. For this reason, it is preferred that the vibration frequency of the piezoelectric element 12 be set with N equal to 1.

It is not easy to manufacture a piezoelectric element 12 having a thickness T of larger than 20 mm. Further, when the thickness of the piezoelectric element 12 is increased, the weight of the piezoelectric element 12 itself is increased, and as a result, the piezoelectric element 12 becomes difficult to handle. In addition, when the thickness of the piezoelectric element 12 is increased, the piezoelectric element 12 requires a large amount of electric energy, that is, a high voltage, to vibrate. For this reason, it is preferred that the thickness T of the piezoelectric element 12 be equal to or less than 20 mm.

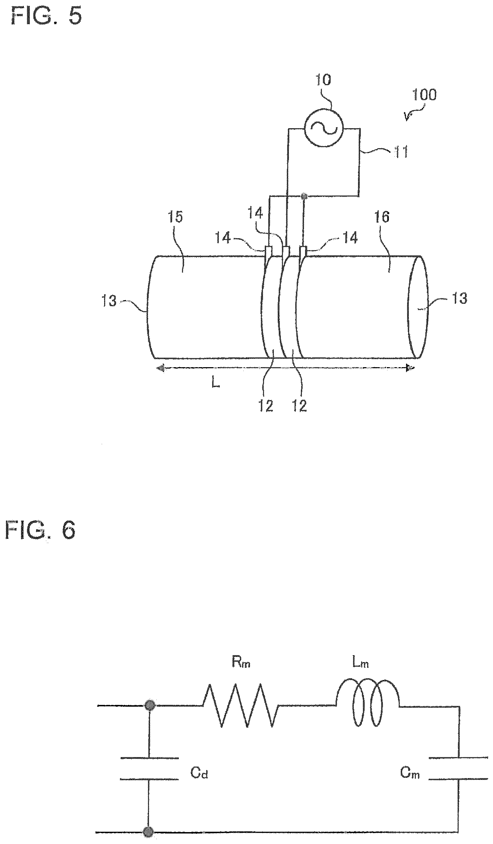

FIG. 5 is a schematic diagram for illustrating a structure that allows the piezoelectric element 12 to operate at low frequency in Embodiment 1 of the present invention. Such a structure is called "Langevin-type oscillator" or "bolt-clamped Langevin-type oscillator". With this structure, vibration can be generated efficiently at a low voltage.

As illustrated in FIG. 5, by sandwiching end surfaces of piezoelectric elements 12 by a metallic block 15 and a metallic block 16, a low-frequency vibration can be generated at a low voltage. In such a case, one end surface of the metallic block 15 and the opposite end surface of the metallic block 16 are the vibration surfaces 13. When the length between one end of one metallic block 15 and the opposite end of one metallic block 16 is represented by L, the frequency at which vibration is most likely to occur is represented by f, and the speed of sound passing through the metallic block 15 and the metallic block 16 is represented by C', the following Expression (2) is established. N is a natural number.

$$f=C'/(2L)\times N \qquad \ldots(2)$$

The frequency f at which vibration is most likely to occur is a resonance frequency. That is, by adjusting the length L, the resonance frequency can be adjusted. In addition, by increasing the length L, the frequency can be lowered. Even when the length L is increased, the thickness T of the piezoelectric element 12 remains unchanged, and thus a higher voltage is not needed. That is, low-frequency vibration can be generated by using a low voltage.

If the length L is too long, the frequency becomes too low and may be reduced to 20 kHz or less, which is in an audible range, and as a result, the vibration may be noise. Further, when the length L is too long, the size of the foreign substance detection device 100 increases and handleability thereof is impaired. Therefore, it is preferred that the length L be 20 cm or less to ensure that the frequency is 20 kHz or higher.

As shown in the Expression (2), the resonance frequency f is proportional to the speed C' of sound, and inversely proportional to the length L. Thus, to generate a low-frequency vibration, it is preferred to use a material having a slow sound speed and a material having a long length. Here, examples of the speed of sound for metals are given. The sound speed of aluminum is 6,320 m/s, the sound speed of brass is 4,430 m/s, and the sound speed of copper is 4,660 m/s.

In Embodiment 1, end surfaces of the piezoelectric elements 12 are sandwiched by the metallic blocks 15 and 16, but the end surfaces may be sandwiched by plastic blocks. The sound speeds of plastic are described. The sound speed of acrylic is 2,730 m/s, the sound speed of epoxy is 3,070 m/s, and the sound speed of glass fiber is 2,740 m/s.

In addition, when N is 1, the thickness T of the piezoelectric element 12 and the half-frequency of the fundamental frequency are the same, and the energy conversion efficiency from electric energy to mechanical energy becomes the maximum. For this reason, it is preferred that the vibration frequency of the piezoelectric element 12 be set with N equal to 1.

The piezoelectric element 12 requires more energy to increase the vibration amplitude as the frequency increases. For this reason, it is preferred that driving frequency of the piezoelectric element 12 be set low to drive the piezoelectric element 12 by small electric energy. In this case, it is preferred that the frequency be set to 50 MHz or less.

FIG. 6 is an equivalent circuit diagram of the piezoelectric element 12 in Embodiment 1 of the present invention.

As illustrated in FIG. 6, the piezoelectric element 12 is translated into a diagram of an electric equivalent circuit including a capacitor Cd, a resistor Rm, a coil Lm, and a capacitor Cm. The piezoelectric element 12 is represented by a circuit in which the capacitor Cd is connected in parallel to the resistor Rm, the coil Lm, and the capacitor Cm, which are connected in series.

The capacitor Cd represents an electrostatic capacitance between both electrodes 14 of the piezoelectric element 12. The piezoelectric element 12 is configured in such a manner that a piezoelectric material is sandwiched by two electrodes 14, and hence the piezoelectric element 12 can be considered as a capacitor. The resistor Rm represents a load to be applied when the piezoelectric element 12 vibrates, and is called "mechanical resistance". The resistor Rm, the coil Lm, and the capacitor Cm are obtained by implementing the mechanical constants of the piezoelectric element 12 as electric circuit elements, and are determined in accordance with the type, the size, the material, or other properties of the piezoelectric element 12.

When an AC voltage is applied, the resistance value of the resistor Rm remains unchanged even when the frequency of the power source 10 changes, but the values of the coil Lm and the capacitor Cm change when the frequency of the power source 10 changes. In this case, the impedance corresponds to the resistance of a case in which a direct-current (DC) voltage is applied. As described above, the impedance of the piezoelectric element 12 varies depending on the frequency of the power source 10.

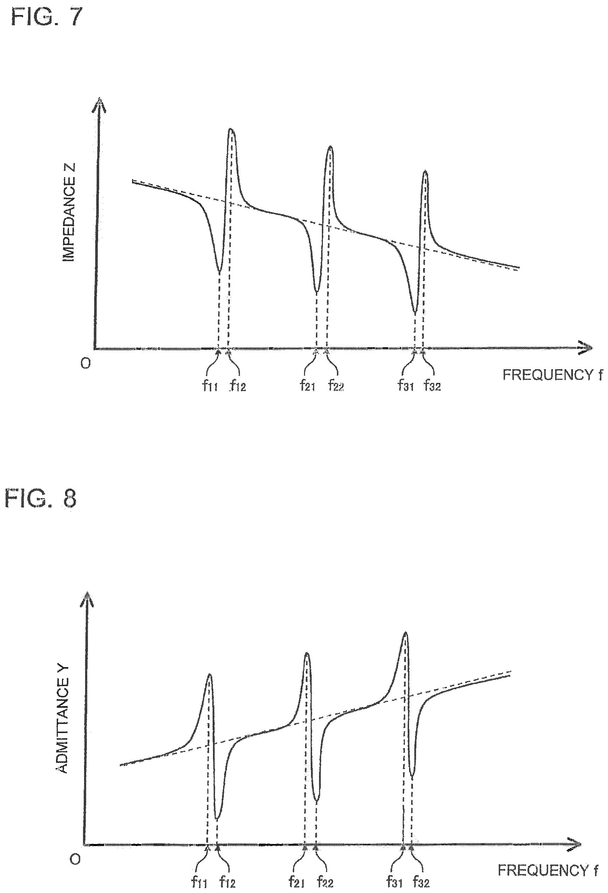

FIG. 7 is a graph for showing frequency characteristics of the impedance of the piezoelectric element 12 in Embodiment 1 of the present invention. In FIG. 7, the horizontal axis indicates the frequency f, and the vertical axis indicates impedance Z. The impedance of a circuit to which an AC voltage is applied corresponds to the resistance of a circuit to which a DC voltage is applied, and represents how difficult current flows. As shown in FIG. 7, the impedance Z has minimum values at frequencies f11, f21, and f31. That is, at the frequencies f11, f21, and f31, current flows easily.

Such frequencies f11, f21, and f31 are called "resonance frequencies". With the frequency f11 as a fundamental frequency, the frequency f21 is a frequency that is twice the frequency f11, and the frequency f31 is a frequency that is three times the frequency f11. As described above, the resonance frequencies appear at frequencies of an integral multiple of the fundamental frequency.

This is because the piezoelectric element 12 is most likely to vibrate when, in the Expression (1), the thickness T of the piezoelectric element 12 and an integral multiple of the half-frequency of frequency f match. At the frequencies f11, f21, and f31, resonance phenomena occur between the coil Lm and the capacitor Cm in FIG. 6. Such resonance phenomena are considered to be mechanical resonance phenomena representable by the above Expression (1).

Meanwhile, as shown FIG. 7, the impedance Z has maximum values at frequencies f12, f22, and f32. That is, at the frequencies f12, f22, and f32, current is difficult to flow. Such frequencies f12, f22, and f32 are called "antiresonance frequencies". With the frequency f12 as a fundamental frequency, the frequency f22 is a frequency that is twice the frequency f12, and the frequency f32 is a frequency that is three times the frequency f12.

As described above, the antiresonance frequencies appear at frequencies of an integral multiple of the fundamental frequency. At the frequencies f12, f22, and f32, resonance phenomena occur among the coil Lm, the capacitor Cm, and the capacitor Cd of FIG. 6. Such resonance phenomena are considered to be resonance phenomena in which a mechanical resonance phenomenon and an electrical resonance phenomenon are combined.

FIG. 8 is a graph for showing frequency characteristics of admittance of the piezoelectric element 12 in Embodiment 1 of the present invention. In FIG. 8, the horizontal axis indicates the frequency f, and the vertical axis indicates admittance Y. The admittance Y of a circuit to which an AC voltage is applied corresponds to the conductance of a circuit to which a DC voltage is applied, and represents how easy current flows. As shown in FIG. 8, the admittance Y has maximum values at frequencies f11, f21, and f31.

That is, at frequencies f11, f21, and f31, current flows easily. This is the same as FIG. 7. In addition, the admittance Y has minimum values at frequencies f12, f22, and f32. That is, at the frequencies f12, f22, and f32, current is difficult to flow. This is the same as FIG. 7. The impedance and the admittance are reciprocals, and therefore the graph of FIG. 8 is a vertically inverted image of the graph of FIG. 7.

As described above, the piezoelectric element 12 converts electric energy into mechanical energy most efficiently at a resonance frequency. Therefore, the piezoelectric element 12 vibrates with small energy at a resonance frequency. Consequently, at a resonance frequency, the vibration amplitude of the piezoelectric element 12 is easily changed by even a small change in electric energy.

For this reason, due to the reverse piezoelectric effect, the piezoelectric element 12 is sensitive to changes in the vibration amplitude, and the electromotive force of the piezoelectric element 12 changes. That is, at a resonance frequency or an antiresonance frequency, the impedance changes easily in response to a change in the resistance value of the resistor Rm of FIG. 6. Therefore, when a mass load that prevents vibration is applied to the vibration surface 13 of the piezoelectric element 12, the resistance value of the resistor Rm of FIG. 6 increases and the impedance changes.

This tendency appears prominently at resonance frequencies, and a conversion from electric energy into vibration energy or a conversion from vibration energy into electric energy is easily performed at resonance frequencies. Thus, the impedance, which is an electric characteristic, of the piezoelectric element 12 changes due to converted electric energy. Thus, the amount of change in the impedance at a resonance frequency increases when the mass load is applied to the vibration surfaces 13. In addition, as the frequency decreases, the electric energy required for the piezoelectric element 12 to vibrate decreases.

In the piezoelectric element 12, as the frequency decreases, the conversion efficiency from electric energy into vibration energy increases. Thus, in the piezoelectric element 12, the amount of change in the impedance with respect to the mass load, which prevents vibration, becomes the maximum at the lowest resonance frequency among a plurality of resonance frequencies. In the piezoelectric element 12, the amount of change in the impedance with respect to the mass load, which prevents vibration, becomes the maximum also at the lowest antiresonance frequency among a plurality of antiresonance frequencies.

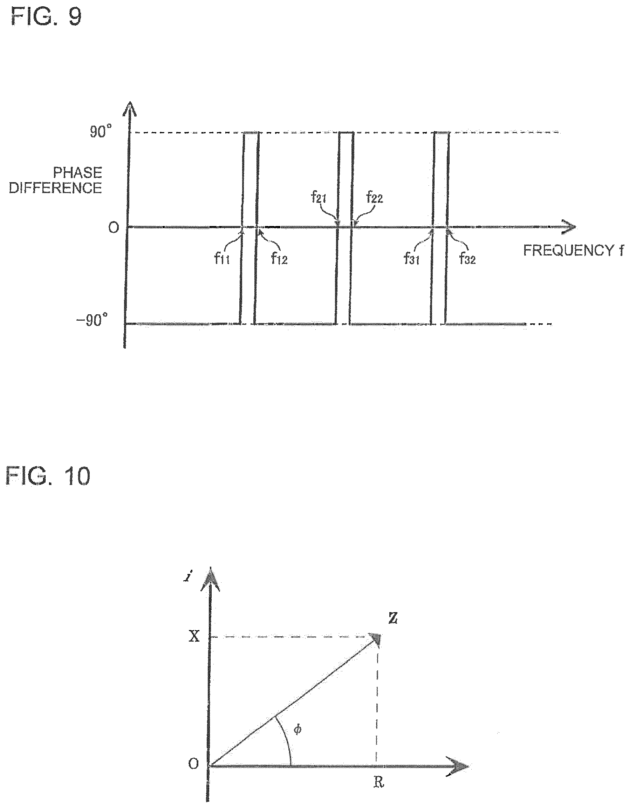

FIG. 9 is a graph for showing frequency characteristics of a phase difference of the piezoelectric element 12 in Embodiment 1 of the present invention. In FIG. 9, the horizontal axis indicates the frequency f, and the vertical axis indicates the phase difference. In the following, how to determine a resonance frequency and an antiresonance frequency is described. As shown in FIG. 9, at a resonance frequency or at an antiresonance frequency, the phase difference between the voltage applied to the piezoelectric element 12 and the current flowing to the piezoelectric element 12 is zero.

That is, a resonance frequency is a frequency at which the impedance of the piezoelectric element 12 becomes a minimum value when the impedance of the piezoelectric element 12 is measured continuously while the frequency of the power source 10 is being continuously changed, and at which the phase difference between the voltage and the current is zero.

In addition, an antiresonance frequency is a frequency at which the impedance of the piezoelectric element 12 becomes a maximum value when the impedance of the piezoelectric element 12 is measured continuously while the frequency of the power source 10 is being continuously changed, and at which the phase difference between the voltage and the current is zero. Resonance frequencies and antiresonance frequencies are obtained when the foreign substance detection device 100 is installed on a pipe 1 in which no foreign substance 2 is adhered.

Next, the foreign substance detection unit 6 is described. The foreign substance detection unit 6 is configured to measure the impedance of the electromechanical conversion element 4, and includes, as illustrated in FIG. 1, a voltage measurement unit 6a, a current measurement unit 6b, a phase measurement unit 6c, an impedance calculation unit 6d, a detection unit 6g, and a power source 6e.

The voltage measurement unit 6a is configured to measure an element voltage applied to the electromechanical conversion element 4 when power is supplied from the power source 6e. The current measurement unit 6b is configured to measure an element current flowing through the electromechanical conversion element 4 when power is supplied from the power source 6e. The phase measurement unit 6c is configured to measure a phase difference between the element voltage measured by the voltage measurement unit 6a and the element current measured by the current measurement unit 6b.

FIG. 10 is a vector diagram for illustrating the impedance Z in Embodiment 1 of the present invention. The impedance calculation unit 6d is configured to calculate the impedance on the basis of the element voltage, the element current, and the phase difference measured by the phase measurement unit 6c. With the voltage represented as V and the current represented as I, the impedance Z can be obtained by an expression $Z=V/I$.

In an AC circuit analysis, the voltage V and the current I are treated as complex vectors, and the impedance Z is also a complex vector. As shown in FIG. 10, the impedance Z is analyzed as $Z=R+iX$, where i represents an imaginary unit. The magnitude $|Z|$ of impedance is obtained by an expression $|Z|=\sqrt{(R^2+X^2)}$. As shown in FIG. 10, the phase difference ($\varphi$) between the voltage and the current is an angle formed by an R component of Z and the Z vector.

In this case, the impedance calculation unit 6d not only calculates the impedance but also calculates the impedance every time the frequency of the power source 6e is changed, thereby measuring a resonance frequency or an antiresonance frequency. Depending on the type of the foreign substance 2 adhered inside the pipe 1, in addition to an increase of the resistance value of the resistor Rm shown in FIG. 6, the capacitor Cm and the coil Lm also vary. Consequently, the change in the measured impedance includes not only a variation of the resistance value of the resistor Rm but also variations of the values of the capacitor Cm and the coil Lm.

Thus, a variation of the mass load due to adhesion of a foreign substance cannot be measured accurately. For this reason, in Embodiment 1, a resonance frequency or an antiresonance frequency is measured, and the resonance frequency or the antiresonance frequency is used as the frequency at which the impedance is measured. Therefore, the change in the impedance does not include the variations of the values of the capacitor Cm and the coil Lm, but includes only the variation of resistance value of the resistor Rm.

As a result, the mass load due to adhesion of a foreign substance, that is, the resistance value of the resistor Rm can be measured with high accuracy. The detection unit 6g is configured to detect adhesion of a foreign substance 2 inside the pipe 1 on the basis of the impedance calculated by the impedance calculation unit 6d. The power source 6e is configured to supply power to the electromechanical conversion element 4 to cause the electromechanical conversion element 4 to vibrate.

The impedance calculation unit 6d calculates the impedance on the basis of the phase difference between the element voltage and the element current, the phase difference being measured by the phase measurement unit 6c. At this moment, a resonance called spurious may occur depending on the material or the size of the attachment 20 of the foreign substance detection device 100 illustrated in FIG. 2. The spurious acts as noise in the calculation of impedance, and thus disturbs detection of a foreign substance.

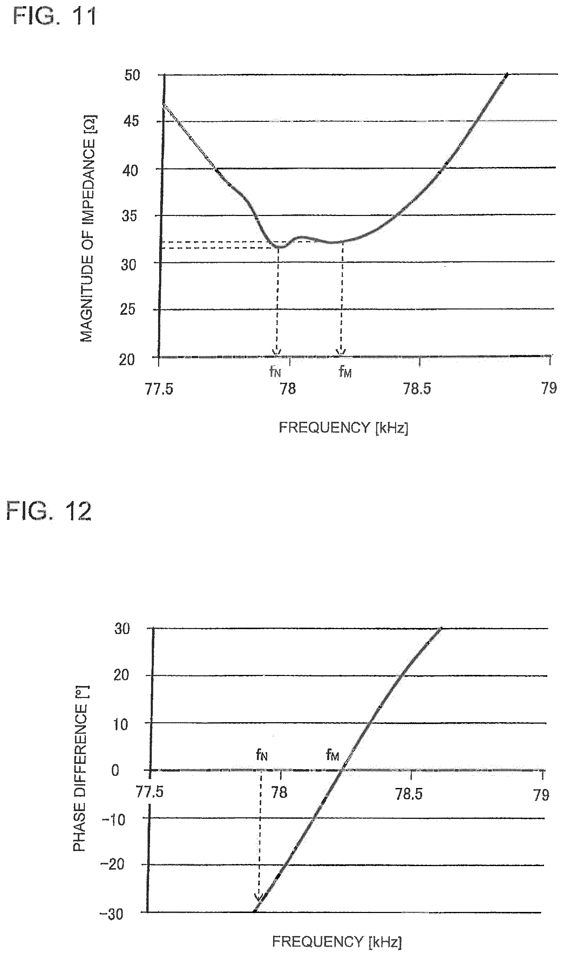

FIG. 11 is a graph for showing frequency characteristics of the impedance of the piezoelectric element 12 when spurious occurs in Embodiment 1 of the present invention. In FIG. 11, the horizontal axis indicates frequency (kHz), and the vertical axis indicates magnitude of the impedance ($\Omega$). FIG. 12 is a graph for showing frequency characteristics of the phase difference of the piezoelectric element 12 when spurious occurs in Embodiment 1 of the present invention.

In FIG. 12, the horizontal axis indicates frequency (kHz), and the vertical axis indicates phase difference (degree). As shown in FIG. 11, when spurious occurs, the impedance becomes the minimum at a frequency fN, which is different from an actual resonance frequency fM of the foreign substance detection device 100. However, as shown in FIG. 12, at the frequency fN at which the impedance becomes the minimum, the phase difference between the element voltage and the element current of the foreign substance detection device 100 is not zero degrees.

Thus, in Embodiment 1, by calculating, by the impedance calculation unit 6d, the impedance on the basis of the phase difference, a measurement error caused by noise, such as spurious, can be eliminated. Depending on the type of a foreign substance 2 to be adhered, the values of the coil Lm and the capacitor Cm of an equivalent circuit of the piezoelectric element 12 shown in FIG. 6 may vary. Therefore, when a plurality of minimum values of impedance are present due to spurious or other reasons, a frequency at which the phase difference between the element voltage and the element current is close to zero degrees is used as a resonance frequency. In addition, when a plurality of maximum values of impedance are present due to spurious or other reasons, a frequency at which the phase difference between the element voltage and the element current is close to zero degrees is used as an antiresonance frequency.

In this case, the impedance is calculated on the basis of the element voltage, the element current, and the phase difference, but the impedance may be calculated on the basis of the element voltage and the element current, and then a resonance frequency may be measured on the basis of the impedance. However, in the piezoelectric element 12, a noise component may be generated due to the shape and the size thereof. When noise is generated, the impedance may become a minimum value at a frequency different from the actual resonance frequency.

For this reason, when a resonance frequency is determined by using only the amplitude of the impedance without considering phase difference, it is difficult to correctly determine a resonance frequency. Thus, in Embodiment 1, by measuring a phase difference by the phase measurement unit 6c, a resonance frequency is determined correctly.

The voltage measurement unit 6a, the current measurement unit 6b, the phase measurement unit 6c, and the power source 6e are connected via the signal line 5. The voltage measurement unit 6a, the current measurement unit 6b, and the phase measurement unit 6c are connected to the impedance calculation unit 6d by transmission lines 6f. The impedance calculation unit 6d and the detection unit 6g are connected by a transmission line 6f.

Next, the foreign substance 2 that is adhered inside the pipe 1 is described. In the pipe 1, the foreign substance 2 called scale, which forms due to the quality of water used, is generated and is adhered on the inner surface of the pipe 1. Scale may be peeled from and reattached to the inside of the pipe 1, thereby causing clogging of a flow path of the pipe 1. The foreign substance 2 is not limited to scale. The foreign substance 2 may be any soft foreign substance.

Next, a foreign substance detection method according to Embodiment 1 is described. First, when power is supplied from the power source 6e to the electromechanical conversion element 4, which is attached to the pipe 1 and converts electric energy into mechanical energy, the element voltage applied to the electromechanical conversion element 4, the element current flowing through the electromechanical conversion element 4, and the phase difference between the element voltage applied to the electromechanical conversion element 4 and the element current flowing through the electromechanical conversion element 4 are measured.

Then, on the basis of the element voltage applied to the electromechanical conversion element 4, the element current flowing through the electromechanical conversion element 4, and the phase difference, the impedance is calculated. Then, on the basis of the impedance, the adhesion of a foreign substance 2 inside the pipe 1 is detected.

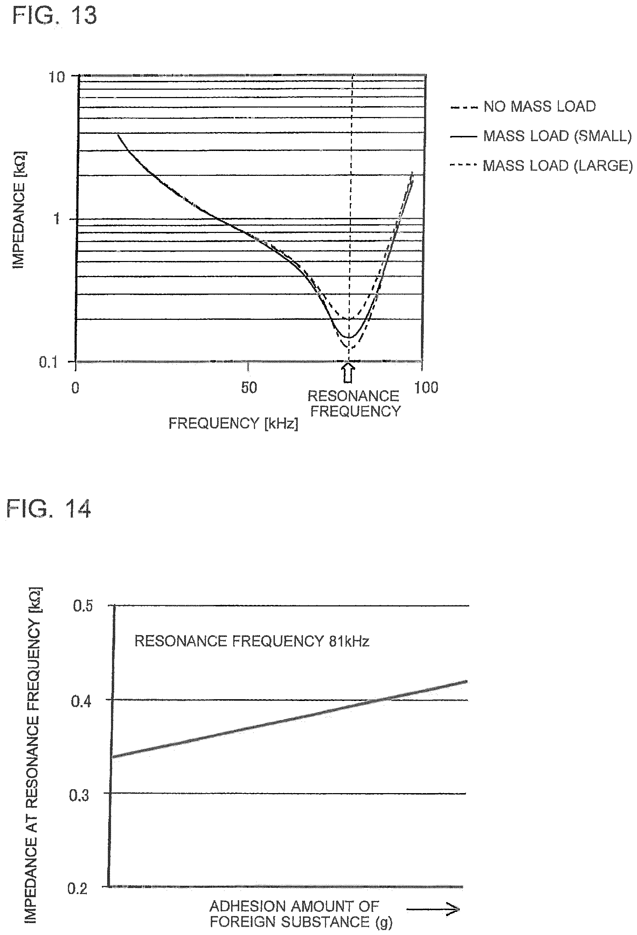

FIG. 13 is a graph for showing frequency characteristics of the impedance of the piezoelectric element 12 with different mass loads in Embodiment 1 of the present invention. In FIG. 13, the horizontal axis indicates the frequency (kHz), and the vertical axis indicates the magnitude of the impedance ($\Omega$). FIG. 14 is a graph for showing the relationship between an adhesion amount of a foreign substance 2 and the impedance of the piezoelectric element 12 in Embodiment 1 of the present invention.

In FIG. 14, the horizontal axis indicates the adhesion amount (g) of a foreign substance, and the vertical axis indicates the magnitude of the impedance ($\Omega$) at a resonance frequency. Next, functions of the foreign substance detection device 100 according to Embodiment 1 are described. As shown in FIG. 13, the impedance Z changes as the frequency changes, and becomes the minimum at a resonance frequency. In addition, as the mass load increases, the impedance of the piezoelectric element 12 increases. This tendency is most prominently seen at the resonance frequency.

That is, the amount of change in the impedance of the piezoelectric element 12 becomes largest at the resonance frequency. In FIG. 13, the resonance frequency is, for example, 81 kHz. As shown in FIG. 14, when the impedance of the piezoelectric element 12 at the resonance frequency is measured while the adhesion amount of the foreign substance 2 inside the pipe 1 is being changed, the impedance increases as the adhesion amount of the foreign substance 2 increases.

As described above, the foreign substance detection device 100 detects the adhesion of a foreign substance 2 inside the pipe 1 on the basis of the impedance of the electromechanical conversion element 4. When a foreign substance 2 is adhered inside the pipe 1, the impedance of the electromechanical conversion element 4 changes due to the mass load. That is, the foreign substance detection device 100 detects the adhesion of a foreign substance 2 on the basis of a change in the mass load. Consequently, the measurement accuracy is high, and as a result, a foreign substance 2 having a low acoustic impedance can also be detected.

Specifically, the foreign substance detection device 100 can detect even a soft foreign substance 2. In addition, when detecting a foreign substance 2, the foreign substance detection device 100 does not detect reflected waves, and does not measure a change in the strength of a high-order harmonic spectrum. Therefore, the measurement can be performed in a short time, the measurement accuracy is high, and a foreign substance 2 having a low acoustic impedance can also be detected.

In a case where, as in the related art, measurement is performed by emitting ultrasonic waves into the inside of the pipe 1 and measuring the waveform of a reflected wave, the measurement takes a long time. Further, in such a case, because ultrasonic waves that have multiply reflected inside the pipe 1 are received, the measurement accuracy is lowered. In contrast, in Embodiment 1, a change in the mass inside the pipe 1 is detected on the basis of a change in the impedance of the electromechanical conversion element 4.

Therefore, a foreign substance 2 can be measured in a short time, and the measurement accuracy thereof is high. Further, in a case where, as in the related art, the adhesion of a foreign substance 2 is detected on the basis of a change in the spectrum, when a foreign substance 2 having a low acoustic impedance, for example, a soft foreign substance 2, is adhered inside the pipe 1, a difference in the strength of the spectrum is hardly obtained.

Thus, it is difficult to detect the adhesion of the foreign substance 2. In contrast, in Embodiment 1, even when a soft foreign substance 2 is adhered, a change in the mass inside the pipe 1 is detected on the basis of the change in the impedance of the electromechanical conversion element 4. Consequently, even a foreign substance 2 having a low acoustic impedance can be detected.

In addition, the foreign substance detection unit 6 further includes the phase measurement unit 6c configured to measure the phase difference between the element voltage measured by the voltage measurement unit 6a and the element current measured by the current measurement unit 6b, and the impedance calculation unit 6d is configured to calculate the impedance on the basis of the element voltage, the element current, and the phase difference measured by the phase measurement unit 6c. Thus, a resonance frequency can be determined correctly.

Further, as the electromechanical conversion element 4, the piezoelectric element 12 is used. In addition, the power source 6e is configured to drive the electromechanical conversion element 4 under a state in which the vibration frequency thereof is a resonance frequency. Consequently, a foreign substance 2 that is adhered inside the pipe 1 and is a mass load preventing vibration of the piezoelectric element 12 can be detected with high accuracy. In addition, the power source 6e is configured to drive the electromechanical conversion element 4 under a state in which the vibration frequency thereof is the lowest resonance frequency among a plurality of resonance frequencies.

Consequently, the amount of change in the impedance increases, and the foreign substance 2 can be detected with higher accuracy. The impedance calculation unit 6d is configured to measure a resonance frequency of the electromechanical conversion element 4 on the basis of a measurement result of the impedance of the electromechanical conversion element 4. Consequently, the common impedance calculation unit 6d can measure both impedance and resonance frequency.

In addition, the power source 6e is configured to drive the electromechanical conversion element 4 under a state in which the vibration frequency thereof is an antiresonance frequency. Consequently, a foreign substance 2 that is a mass load preventing vibration of the piezoelectric element 12 can be detected with high accuracy. In addition, the power source 6e is configured to drive the electromechanical conversion element 4 under a state in which the vibration frequency thereof is the lowest antiresonance frequency among a plurality of antiresonance frequencies.

Consequently, the amount of change in the impedance increases, and the foreign substance 2 can be detected with higher accuracy. The impedance calculation unit 6d measures an antiresonance frequency of the electromechanical conversion element 4 on the basis of a measurement result of the impedance of the electromechanical conversion element 4. Consequently, the common impedance calculation unit 6d can measure both impedance and antiresonance frequency.

The power source 6e is configured to drive the electromechanical conversion element 4 at a vibration frequency, whose phase difference is almost zero degrees. Consequently, even in a case where a plurality of extreme values of impedance are present due to spurious or other reasons, a noise component can be eliminated.

Further, it is preferred that, before impedance is actually measured, the signal line 5 of the foreign substance detection device 100 be disconnected from the electromechanical conversion element 4, and that the impedance of a case where a positive electrode and a negative electrode of the signal line 5 are open-circuited and the impedance of a case where the positive electrode and the negative electrode of the signal line 5 are short-circuited be measured.

Consequently, stray capacitance components and inductance components of the signal line 5, that is, noise components that cause reduction in measurement accuracy are measured. Therefore, for example, noise components are subtracted from the actual measurement values when the adhesion amount of a foreign substance is small, and thus a foreign substance can be detected more accurately even when the adhesion amount of the foreign substance is small.

Open-circuiting the positive electrode and the negative electrode of the signal line 5 and short-circuiting of the positive electrode and the negative electrode thereof are performed manually or automatically.

In this case, the attachment 20 illustrated in FIG. 2, which is used to attach the piezoelectric element 12 to the pipe 1, is in contact with the surface of the pipe 1. It is preferred that, in the attachment 20, the size of the area that comes into contact with the piezoelectric element 12 be between one and two times the size of the area of the vibration surface 13 of the piezoelectric element 12. In addition, an oil, such as grease, may be applied into the contact surface between the piezoelectric element 12 and the attachment 20, and into the contact part between the attachment 20 and the pipe 1. As a result, the accuracy in detecting a foreign substance 2 is improved. The length L' of the attachment 20 is set so that the resonance frequency occurs at 81 kHz, for example.

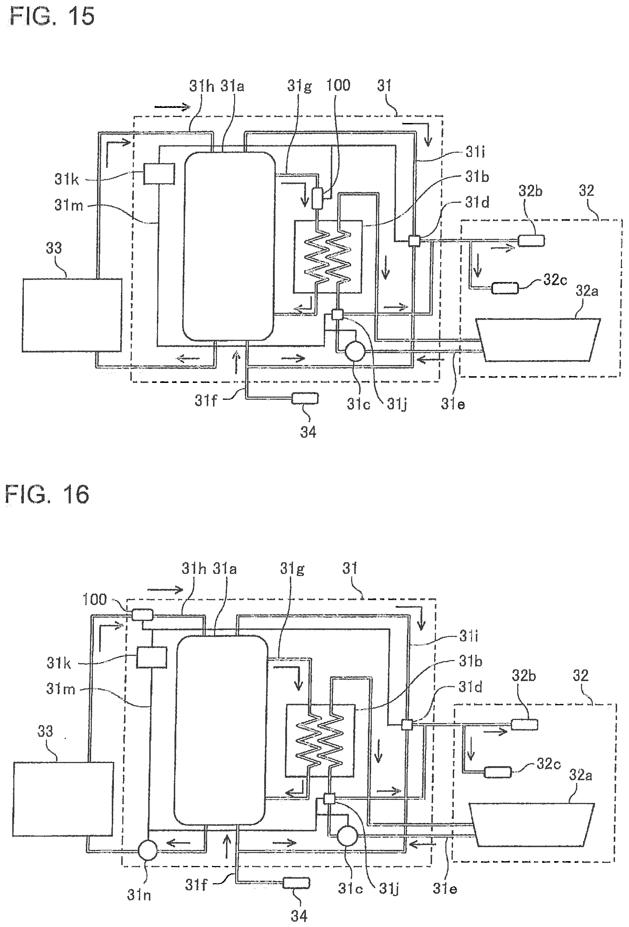

FIG. 15 is a circuit diagram for illustrating Example 1 of the application of the foreign substance detection device 100 to a hot-water supply device 31 in Embodiment 1 of the present invention. In the following, an example in which the foreign substance detection device 100 in Embodiment 1 is applied to the hot-water supply device 31 is described. As illustrated in FIG. 15, the hot-water supply device 31 is connected to a heat pump unit 33, and hot water generated by the heat pump unit 33 is supplied to a bathroom 32.

The hot-water supply device 31 includes a tank 31a, a heat exchanger 31b, a pump 31c, a mixing valve 31d, a switching valve 31j, the foreign substance detection device 100, and an operation controller 31k. The tank 31a is configured to store hot water, and is connected to the heat pump unit 33 by a heat pump pipe 31h. The heat exchanger 31b is configured to exchange heat between the water of a bathtub 32a and the hot water of the tank 31a when reheating is performed in the bathtub 32a installed in the bathroom 32. The heat exchanger 31b is connected to the tank 31a by a heat exchanger pipe 31g, and connected also to the bathtub 32a by a reheating pipe 31e. The pump 31c is installed in the reheating pipe 31e to circulate the water that flows through the reheating pipe 31e.

The mixing valve 31d is installed on a hot-water supply pipe 31i that connects the tank 31a and the bathroom 32, and is configured to supply water to a shower 32b and a faucet 32c installed in the bathroom 32 by mixing the water from the tank 31a with the water supplied from a raw water supply unit 34 via a raw water supply pipe 31f. The switching valve 31j is installed on the reheating pipe 31e, and is configured to switch the supply of the water flowing in the reheating pipe 31e to the heat exchanger 31b or to the shower 32b and the faucet 32c. The foreign substance detection device 100 is installed on the heat exchanger pipe 31g on the upstream side of the heat exchanger 31b. The operation controller 31k is configured to control operations of the hot-water supply device 31, and is connected to the pump 31c, the mixing valve 31d, the switching valve 31j, and the foreign substance detection device 100 by a control cable 31m.

Tap water is used in the hot-water supply device 31. Tap water contains components such as iron, chlorine, silica, and calcium. Substances such as the iron, chlorine, silica, and calcium dissolved in the tap water may be precipitated on the inner surface of the pipe 1 of the hot-water supply device 31, thereby forming adhesion called scale. The scale is formed prominently on a part of the inner surface of the pipe 1 in which the temperature is high.

When the scale is formed, the pipe 1 may be clogged, and as a result, the hot-water supply device 31 may be damaged. In Embodiment 1, the foreign substance detection device 100 is installed on the pipe 1, and the foreign substance detection device 100 detects scale, which is a foreign substance 2, and therefore, failure of the hot-water supply device 31 caused by the scale can be suppressed.

When no scale is adhered on the inner surface of the pipe 1, for example, immediately after operations of the hot-water supply device 31 are started, the foreign substance detection device 100 measures a resonance frequency and impedance in advance. When the foreign substance detection device 100 detects a change in the impedance after the operations of the hot-water supply device 31 are started, the user of the hot-water supply device 31 is notified by, for example, an alarm that scale is formed on the inner surface of the pipe 1.

In this case, in the hot-water supply device 31, the foreign substance detection device 100 sends a detection signal to the operation controller 31k via the control cable 31m. As a result, the operation controller 31k can take measures such as stopping of the operations of the hot-water supply device 31. Consequently, failure of the hot-water supply device 31 can be prevented.

The foreign substance detection device 100 can be appropriately installed at any place, such as on the reheating pipe 31e or the heat pump pipe 31h, where a foreign substance 2 adhered inside the pipe 1 needs to be detected. For example, the foreign substance detection device 100 may be installed at a part where the pipe 1 is easily clogged, or a part where wastewater flows.

FIG. 16 is a circuit diagram for illustrating Example 2 of the application of the foreign substance detection device 100 to the hot-water supply device 31 in Embodiment 1 of the present invention. In the following, an example in which the foreign substance detection device 100 is installed on the heat pump pipe 31h on the heat pump unit 33 side of the hot-water supply device 31 is described.

As illustrated in FIG. 16, the foreign substance detection device 100 is installed on the heat pump pipe 31h on the downstream side of the heat pump unit 33. In addition, a circulation pump 31n configured to circulate the water flowing in the heat pump pipe 31h is installed on the heat pump pipe 31h on the upstream side of the heat pump unit 33. The operation controller 31k is connected to the circulation pump 31n by a control cable 31m.

The tap water inside the tank 31a is sent to the heat pump unit 33 by the circulation pump 31n. The tap water that is sent to the heat pump unit 33 is warmed by the heat pump unit 33, and is returned to the tank 31a to heat the tap water in the tank 31a.

Also in this case, the tap water contains components such as iron, chlorine, silica, and calcium, and therefore substances such as the iron, chlorine, silica, and calcium dissolved in the tap water may be precipitated on the inner surface of the heat pump pipe 31h of the hot-water supply device 31, thereby forming adhesion called scale. In this case, water of high temperature flows in the heat pump pipe 31h between the heat pump unit 33 and the tank 31a, and therefore scale is easily formed especially in the heat pump pipe 31h.

When scale is formed, the heat pump pipe 31h may be clogged, and as a result, the hot-water supply device 31 may be damaged. In Example 2, the foreign substance detection device 100 installed on the heat pump pipe 31h detects scale, which is a foreign substance 2, in the heat pump pipe 31h, and therefore failure of the hot-water supply device 31 caused by the scale can be suppressed.

In Example 2, as with Example 1, when no scale is adhered on the inner surface of the heat pump pipe 31h, for example, immediately after operations of the hot-water supply device 31 are started, the foreign substance detection device 100 measures a resonance frequency and impedance in advance. When the foreign substance detection device 100 detects a change in the impedance after operations of the hot-water supply device 31 are started, the user of the hot-water supply device 31 is notified by, for example, an alarm that scale is formed on the inner surface of the heat pump pipe 31h.

In this case, in the hot-water supply device 31, the foreign substance detection device 100 sends a detection signal to the operation controller 31k via the control cable 31m. As a result, the operation controller 31k can take measures such as stopping of the circulation pump 31n and stopping of the operations of the hot-water supply device 31. Consequently, failure of the hot-water supply device 31 can be prevented.

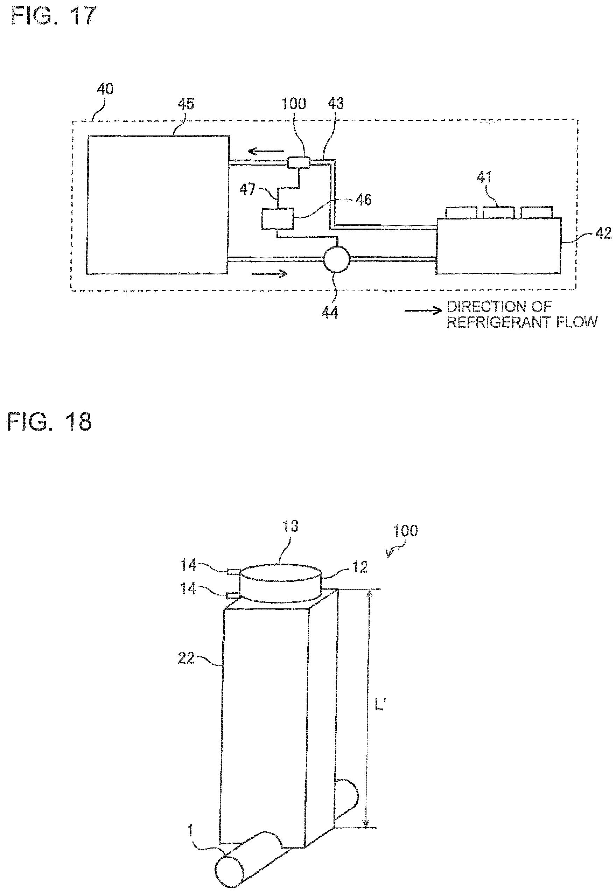

FIG. 17 is a circuit diagram for illustrating an example of application of the foreign substance detection device in Embodiment 1 of the present invention to a cooler 40. In the following, an example in which the foreign substance detection device 100 according to Embodiment 1 is applied to a cooler 40 is described. As illustrated in FIG. 17, the cooler 40 is connected to a radiator 45, and refrigerant, of which heat is radiated by the radiator 45 is supplied to a cooling device 42.

The cooler 40 includes the cooling device 42, a refrigerant circulation pump 44, the radiator 45, the foreign substance detection device 100, and an operation controller 46. The cooling device 42 is configured to cool an object 41 to be cooled, and includes fins that are mounted so as to efficiently exchange heat between the refrigerant and the heat generated by the object 41 to be cooled. The cooling device 42 is made of a metal having good heat conductivity, and aluminum or copper, for example, is used as the metal.

In this case, the object 41 to be cooled is an object that generates heat, and corresponds to an electronic device such as a CPU, an LSI, or an inverter, or a power semiconductor. The refrigerant circulation pump 44 is configured to circulate the refrigerant enclosed inside a refrigerant circulation pipe 43, and is installed on the upstream side of the cooling device 42. The radiator 45 is a heat dissipation device configured to exchange heat between refrigerant and a heat medium such as air, and is installed on the upstream side of the refrigerant circulation pump 44.

The foreign substance detection device 100 is installed on the refrigerant circulation pipe 43 at a location that is on the upstream side of the radiator 45 and on the downstream side of the cooling device 42. The operation controller 46 is configured to control operations of the cooler 40, and is connected to the refrigerant circulation pump 44 and to the foreign substance detection device 100 by control lines 47.

In the cooler 40, the refrigerant that is circulated by the refrigerant circulation pump 44 flows into the radiator 45, and, by the radiator 45, exchanges heat with air, for example, thereby being cooled. The refrigerant that is cooled by the radiator 45 flows into the cooling device 42, and, by the cooling device 42, exchanges heat with the heat generated by the object 41 to be cooled, thereby being heated. At this moment, the object 41 to be cooled is cooled.

As the refrigerant flowing in the refrigerant circulation pipe 43, a cooling medium such as an organic solvent having a low freezing point, or water, such as tap water or ion exchange water, is used. When tap water, for example, is used as the refrigerant, the tap water contains components such as iron, chlorine, silica, and calcium, and as a result, substances such as the iron, chlorine, silica, and calcium dissolved in the tap water may be precipitated on the inner surface of the refrigerant circulation pipe 43 of the cooler 40, thereby forming adhesion of a corrosion product, scale, or other matters.

When scale is formed, the refrigerant circulation pipe 43 may be clogged, and as a result, the cooler 40 may be damaged. In this example, when the foreign substance detection device 100 installed on the refrigerant circulation pipe 43 detects scale, which is a foreign substance 2, in the refrigerant circulation pipe 43, the foreign substance detection device 100 sends a detection signal to the operation controller 46 via the control line. As a result, the operation controller 46 can take measures such as stopping of the refrigerant circulation pump 44. Consequently, failure of the cooler 40 can be prevented.

The application of the foreign substance detection device 100 is not limited to the hot-water supply device 31 and the cooler 40. The foreign substance detection device 100 according to Embodiment 1 can be installed on a pipe of a product in which a heat-exchange system, such as a hot-water supply device or a cooler, is used. In addition, the foreign substance detection device 100 can detect not only scale, but also a foreign substance such as a corrosion product that is precipitated, solidified, or accumulated inside the pipe 1, iron rust, or dirt.

First Modification Example

FIG. 18 is a perspective view for illustrating a foreign substance detection device 100 according to a first modification example of Embodiment 1 of the present invention. As illustrated in FIG. 18, in the first modification example, an attachment 22 is formed into a rectangular parallelepiped shape, and a part of the attachment 22 that comes into contact with a pipe 1 is cut along the shape of the outer periphery edge of the pipe 1. In the first modification example, the same effect as that of Embodiment 1 is obtained.

Second Modification Example

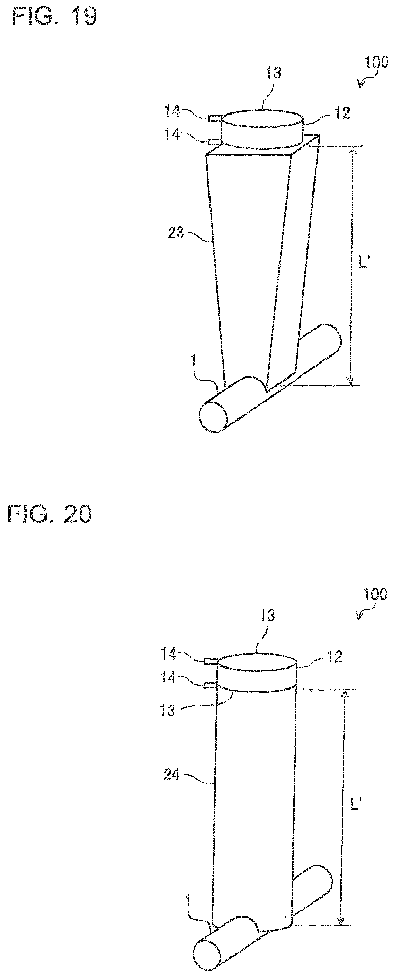

FIG. 19 is a perspective view for illustrating a foreign substance detection device 100 according to a second modification example of Embodiment 1 of the present invention. As illustrated in FIG. 19, in the second modification example, an attachment 23 is formed into an inverted triangular frustum shape, and a part of the attachment 23 that comes into contact with a pipe 1 is cut along the shape of the outer periphery edge of the pipe 1. In the second modification example, the same effect as that of Embodiment 1 is obtained.

Third Modification Example

FIG. 20 is a perspective view for illustrating a foreign substance detection device 100 according to a third modification example of Embodiment 1 of the present invention. As illustrated in FIG. 20, in the third modification example, an attachment 24 is formed into a cylindrical shape, and a part of the attachment 24 that comes into contact with a pipe 1 is cut along the shape of the outer periphery edge of the pipe 1. In the third modification example, the same effect as that of Embodiment 1 is obtained.

As with Embodiment 1, in the first, second, and third modification examples, it is preferred that, in each attachment that is used for attaching the piezoelectric element 12 to the pipe 1, the size of the area that comes into contact with the piezoelectric element 12 be between one and two times the size of the area of the vibration surface 13 of the piezoelectric element 12. In addition, oil, such as grease, may be applied to the contact surface between the piezoelectric element 12 and the attachment, and to the contact part between the attachment and the pipe 1.

As a result, the accuracy in detecting a foreign substance 2 is improved. Also in the first, second, and third modification examples, the length L' of the attachment may be adjusted so that the resonance frequency can be changed.

Fourth Modification Example

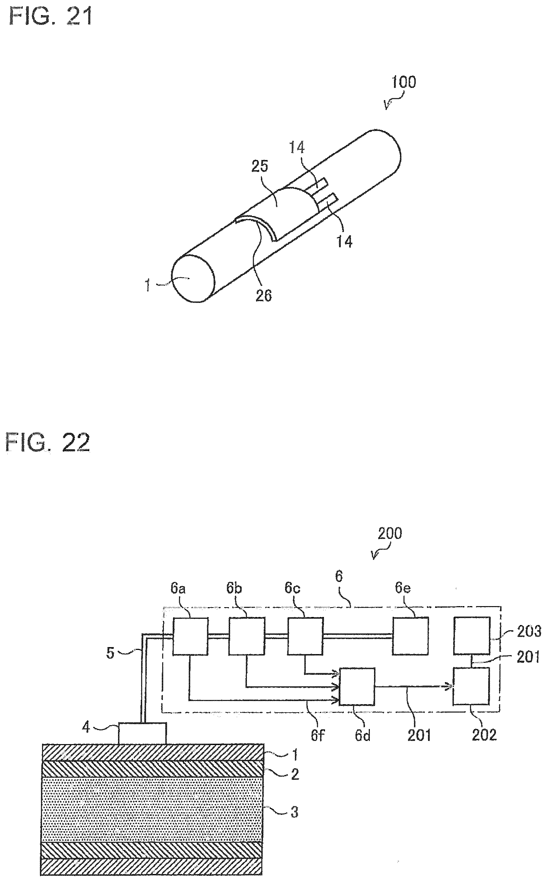

FIG. 21 is a perspective view for illustrating a foreign substance detection device 100 according to a fourth modification example of Embodiment 1 of the present invention. As illustrated in FIG. 21, in the fourth modification example, an attachment 20 is not used to attach a piezoelectric element 25 to the pipe 1. In this way, a vibration surface 26 of the piezoelectric element 25 may be configured to be formed into a curved surface along the shape of the pipe 1.

As a result, the piezoelectric element 25 can be attached directly to the pipe 1. Further, by using PVDF as a piezoelectric material of the piezoelectric element 25, a piezoelectric element 25 having flexibility can be achieved. Therefore, the piezoelectric element 25 can be attached directly to the pipe 1.

Embodiment 2

FIG. 22 is a schematic diagram for illustrating a foreign substance detection device 200 according to Embodiment 2 of the present invention. Embodiment 2 differs from Embodiment 1 in that the foreign substance detection unit 6 includes a storage unit 203. In Embodiment 2, parts that are common to Embodiment 1 are denoted by the same reference symbols, and descriptions thereof are omitted. Further, features that are different from Embodiment 1 are mainly described.

As illustrated in FIG. 22, the foreign substance detection unit 6 includes the storage unit 203 and a collation unit 202.

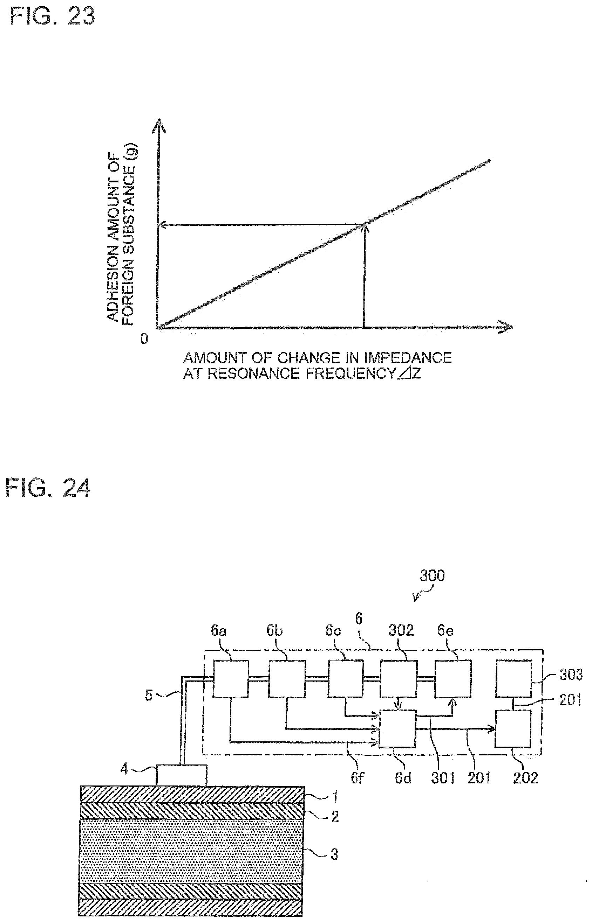

FIG. 23 is a graph for showing a relationship between the amount of change in the impedance of the piezoelectric element 12 and the adhesion amount of a foreign substance 2 in Embodiment 2 of the present invention. In FIG. 23, the horizontal axis indicates an amount of change in the impedance $\Delta Z$ at a resonance frequency, and the vertical axis indicates an adhesion amount (g) of a foreign substance. In FIG. 23, the adhesion amount of a foreign substance increases in proportion as the amount of change in the impedance $\Delta Z$ at a resonance frequency increases.

The storage unit 203 is configured to store a table indicating the relationship between the amount of change in the impedance and the adhesion amount of a foreign substance 2. As shown in FIG. 23, the table is, for example, calibration curve data indicating the relationship between the amount of change in the impedance $\Delta Z$ at a resonance frequency and the adhesion amount of a foreign substance 2. The foreign substance detection device 200 measures, in advance, calibration data on the amount of change in the impedance $\Delta Z$ at a resonance frequency and the adhesion amount of a foreign substance 2 inside the pipe 1, and stores the measured calibration data in the storage unit 203.

Thus, when the amount of change in the impedance $\Delta Z$ at a resonance frequency is known, the adhesion amount of a foreign substance is obtained. The storage unit 203 is connected to the collation unit 202 by a transmission line 201. The storage unit 203 may be provided outside the foreign substance detection unit 6.

The collation unit 202 is configured to collate the amount of change in the impedance calculated by the impedance calculation unit 6d with the table stored in the storage unit 203 to detect the adhesion amount of a foreign substance 2. The collation unit 202 is connected to the impedance calculation unit 6d by the transmission line 201. The collation unit 202 may be provided outside the foreign substance detection unit 6.

In Embodiment 2, the foreign substance detection unit 6 includes the storage unit 203 configured to store the table indicating the relationship between the amount of change in the impedance and the adhesion amount of a foreign substance 2, and the collation unit 202 configured to collate the amount of change in the impedance calculated by the impedance calculation unit 6d with the table stored in the storage unit 203 to detect the adhesion amount of the foreign substance 2. Thus, the adhesion amount of the foreign substance 2 can be detected on the basis of the amount of change in the impedance.

When a table indicating that the adhesion amount of a foreign substance increases in proportion as the amount of change in the impedance $\Delta Z$ at a resonance frequency increases is stored in the storage unit 203, and when the amount of change in the impedance is known, then the adhesion amount of the foreign substance 2 can be obtained by collating the amount of change in the impedance with the table. Then, by detecting the adhesion amount of the foreign substance 2, the thickness of the foreign substance 2 adhered inside the pipe 1 can be recognized.

The adhesion amount of a foreign substance 2 that causes troubles in operations and leads to failure may be set as a threshold value in advance, and an alarm may be emitted when the adhesion amount of the foreign substance 2 exceeds the threshold value. Thus, emission of the alarm can be suppressed while the adhesion of the foreign substance 2 inside the pipe 1 is not causing any troubles in operations. In addition, the warning level can be changed by setting a plurality of threshold values in advance and by increasing the sound of an alarm each time the adhesion amount of the foreign substance 2 exceeds each threshold value.

Thus, the operation stop period due to replacement of the pipe 1 can be shortened. Further, by preventing excess replacement of the pipe 1, the cost required in the replacement of the pipe 1 can be reduced. In addition, on the basis of the warning level, the adhesion condition of the foreign substance 2 adhered inside the pipe 1 can be recognized.

Embodiment 3

FIG. 24 is a schematic diagram for illustrating a foreign substance detection device 300 according to Embodiment 3 of the present invention. Embodiment 3 differs from Embodiment 2 in that the foreign substance detection unit 6 includes a temperature measurement unit 302. In Embodiment 3, parts that are common to Embodiment 1 or 2 are denoted by the same reference symbols, and descriptions thereof are omitted. Further, features that are different from Embodiment 1 or 2 are mainly described.

As illustrated in FIG. 24, the foreign substance detection unit 6 includes the temperature measurement unit 302. The temperature measurement unit 302 is configured to measure the temperature of the electromechanical conversion element 4. A storage unit 303 is configured to store tables indicating the relationship between the amount of change in the impedance and the adhesion amount of a foreign substance 2 for each temperature measured by the temperature measurement unit 302.

The collation unit 202 is configured to collate the amount of change in the impedance calculated by the impedance calculation unit 6d with the tables stored in the storage unit 303 to detect the adhesion amount of the foreign substance 2.

In this case, the impedance calculation unit 6d is connected to the power source 6e by a frequency transmission line 301. When the temperature of the electromechanical conversion element 4 changes, the resonance frequency thereof changes. Consequently, when a fluid 3 of different temperatures flows in the pipe 1, the resonance frequency changes depending on the temperature of the fluid 3 flowing therein. The impedance calculation unit 6d sends a measured resonance frequency to the power source 6e via the frequency transmission line 301. Thus, the power source 6e changes the resonance frequency to a resonance frequency corresponding to the temperature of the fluid 3 flowing in the pipe 1.

In Embodiment 3, the foreign substance detection unit 6 further includes the temperature measurement unit 302 configured to measure the temperature of the electromechanical conversion element 4. The storage unit 303 is configured to store the tables indicating the relationship between the amount of change in the impedance and the adhesion amount of the foreign substance 2 for each temperature measured by the temperature measurement unit 302.

The collation unit 202 is configured to collate the amount of change in the impedance calculated by the impedance calculation unit 6d with the tables stored in the storage unit 303 to detect the adhesion amount of the foreign substance 2. Consequently, even when the temperature of the fluid 3 flowing in the pipe 1 changes, the amount of change in the impedance can be detected for each temperature at a resonance frequency at which the impedance is most likely to change. Thus, the thickness of the foreign substance 2 adhered inside the pipe 1 can be recognized.

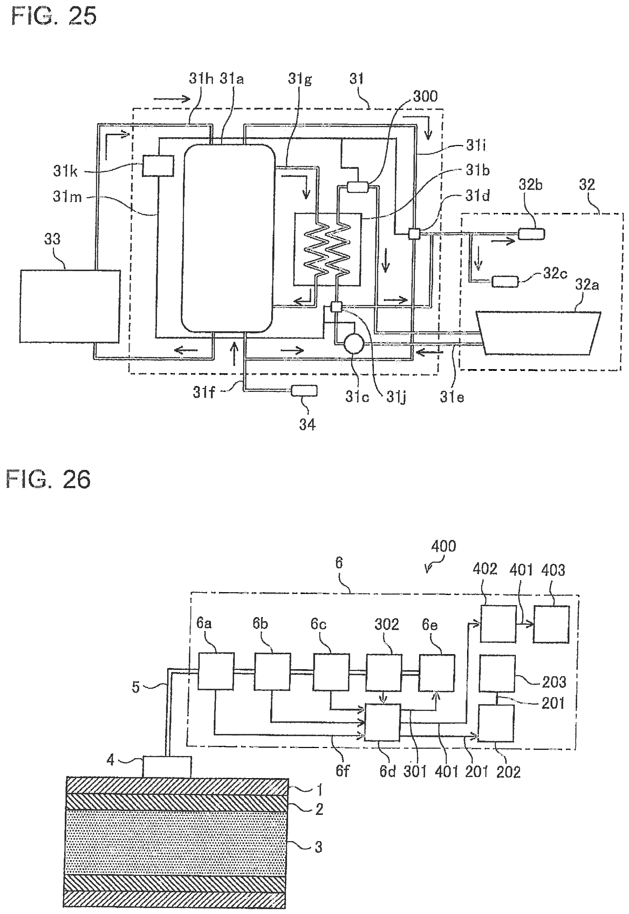

FIG. 25 is a circuit diagram for illustrating a hot-water supply device 31 in Embodiment 3 of the present invention. In the following, an example in which the foreign substance detection device 300 according to Embodiment 3 is applied to the hot-water supply device 31 is described. As illustrated in FIG. 25, the hot-water supply device 31 in Embodiment 3 differs from the hot-water supply device 31 in Embodiment 1 in that the foreign substance detection device 300 is installed on the reheating pipe 31e.

The setting temperature for bath water in the bathtub 32a varies depending on the season or the personal preference. In addition, after the bathtub 32a is filled with hot water, the temperature of the bath water in the bathtub 32a gradually decreases over time. In Embodiment 3, even when such bath water, whose temperature varies, flows into the reheating pipe 31e, the amount of change in the impedance can be detected for each temperature at a resonance frequency at which the impedance is most likely to change. Thus, the thickness of the foreign substance 2 adhered inside the pipe 1 can be recognized.

Embodiment 4

FIG. 26 is a schematic diagram for illustrating a foreign substance detection device 400 according to Embodiment 4 of the present invention. Embodiment 4 differs from Embodiment 3 in that the foreign substance detection unit 6 includes a calculation unit 402 and a determination unit 403. In Embodiment 4, parts that are common to Embodiment 1, 2, or 3 are denoted by the same reference symbols, and descriptions thereof are omitted. Further, features that are different from Embodiment 1, 2, or 3 are mainly described.

As illustrated in FIG. 26, the foreign substance detection unit 6 includes the calculation unit 402 and the determination unit 403.

The calculation unit 402 is configured to calculate an electromechanical coupling coefficient on the basis of the resonance frequencies and the antiresonance frequencies among the vibration frequencies of the electromechanical conversion element 4. The resonance frequencies and the antiresonance frequencies are measured by the impedance calculation unit 6d. The calculation unit 402 is connected to the impedance calculation unit 6d by a transmission line 401. The calculation unit 402 may be provided outside the foreign substance detection unit 6.

The electromechanical coupling coefficient is a ratio of the mechanical energy generated in the electromechanical conversion element 4 to the electric energy given to the electromechanical conversion element 4. That is, as the electromechanical coupling coefficient increases, the energy conversion efficiency increases. The electromechanical coupling coefficient varies depending on the type of the electromechanical conversion element 4, the material used in the electromechanical conversion element 4, the production method of the electromechanical conversion element 4, or other factors.

The electromechanical coupling coefficients of a ferrite element and a piezoelectric element are approximately 0.6 or larger, and the electromechanical coupling coefficient of a crystal oscillator is approximately 0.3 or larger. In Embodiment 4, it is preferred that the electromechanical coupling coefficient of the electromechanical conversion element 4 be 0.3 or larger. When the resonance frequency is represented by f1, the antiresonance frequency is represented by f2, and the electromechanical coupling coefficient is represented by k, the following Expression (3) is established.

$$k = \pi/2 \cdot [(f2-f1)/f1]^{\wedge}(1/2) \qquad \ldots (3)$$

The determination unit 403 is configured to determine failure of the device on the basis of the electromechanical coupling coefficient calculated by the calculation unit 402. As the electromechanical conversion element 4 is used over time, the electromechanical coupling coefficient gradually decreases. For this reason, the determination unit 403 determines failure of the device when, for example, the electromechanical coupling coefficient becomes equal to or less than a predetermined threshold value. In this case, the threshold value is 0.5, for example.

In addition, the electromechanical coupling coefficient may be measured in advance before the device is used so that it is determined that failure is present when the electromechanical coupling coefficient decreases to half the electromechanical coupling coefficient before use. For example, when the initial value of the electromechanical coupling coefficient is 0.7, the threshold value is set to 0.35.

Further, the decreasing rate of the electromechanical coupling coefficient with a lapse of time may be measured so that time for replacement of the foreign substance detection device 400 can be predicted. The determination unit 403 is connected to the calculation unit 402 by the transmission line 401. The determination unit 403 may be provided outside the foreign substance detection unit 6.

In Embodiment 4, the foreign substance detection unit 6 includes the calculation unit 402 configured to calculate an electromechanical coupling coefficient on the basis of the resonance frequencies and the antiresonance frequencies among the vibration frequencies of the electromechanical conversion element 4, and the determination unit 403 configured to determine failure of the device on the basis of the electromechanical coupling coefficient calculated by the calculation unit 402. Thus, failure of the device can be recognized.

List of Reference Signs

| | |
|---|---|
| 1 | pipe |
| 2 | foreign substance |
| 3 | fluid |
| 4 | electromechanical conversion element |
| 5 | signal line |
| 6 | foreign substance detection unit |
| 6a | voltage measurement unit |
| 6b | current measurement unit |
| 6c | phase measurement unit |
| 6d | impedance calculation unit |
| 6e | power source |
| 6f | transmission line |
| 6g | detection unit |
| 10 | power source |
| 11 | electric wire |
| 12 | piezoelectric element |
| 13 | vibration surface |
| 14 | electrode |
| 15, | 16 metallic block |
| 20, 22, 23, 24 | attachment |
| 25 | piezoelectric element |
| 26 | vibration surface |
| 31 | hot-water supply device |
| 31a | tank |
| 31b | heat exchanger |
| 31c | pump |
| 31d | mixing valve |
| 31e | reheating pipe |
| 31f | raw water supply pipe |
| 31g | heat exchanger pipe |
| 31h | heat pump pipe |
| 31i | hot-water supply pipe |
| 31j | switching valve |
| 31k | operation controller |
| 31m | control cable |
| 31n | circulation pump |
| 32 | bathroom |
| 32a | bathtub |
| 32b | shower |
| 32c | faucet |
| 33 | heat pump unit |
| 34 | raw water supply unit |
| 40 | cooler |

| 41 | object to be cooled |
| 42 | cooling device |
| 43 | refrigerant circulation pipe |
| 44 | refrigerant circulation pump |
| 45 | radiator |
| 46 | operation controller |
| 47 | control line |
| 100 | foreign substance detection device |
| 200 | foreign substance detection device |
| 201 | transmission line |
| 202 | collation unit |
| 203 | storage unit |
| 300 | foreign substance detection device |
| 301 | frequency transmission line |
| 302 | temperature measurement unit |
| 303 | storage unit |
| 400 | foreign substance detection device |
| 401 | transmission line |
| 402 | calculation unit |
| 403 | determination unit |

**Claims**

1. A foreign substance detection device (100) for detecting a foreign substance adhered inside a pipe (1), comprising:

- an electromechanical conversion element (4), which is attached to an outside of the pipe (1), and is configured to convert electric energy to mechanical energy and convert mechanical energy to electric energy; and
- a foreign substance detection unit (6) configured to measure impedance of the electromechanical conversion element (4) to detect adhesion of a foreign substance inside the pipe (1),

the foreign substance detection unit (6) including:

- a power source (6e) configured to supply power to the electromechanical conversion element (4) to cause the electromechanical conversion element (4) to vibrate;
- a voltage measurement unit (6a) configured to measure an element voltage applied to the electromechanical conversion element (4) when power is supplied from the power source (6e);
- a current measurement unit (6b) configured to measure an element current flowing through the electromechanical conversion element (4) when power is supplied from the power source (6e);
- an impedance calculation unit (6d) configured to calculate the impedance based on the element voltage and the element current; and
- a detection unit (6g) configured to detect adhesion of a foreign substance inside the pipe (1) based on the impedance calculated by the impedance calculation unit (6d),

wherein the foreign substance detection unit (6) further comprises a phase measurement unit (6c) configured to measure a phase difference between the element voltage measured by the voltage measurement unit (6a) and the element current measured by the current measurement unit (6b), and
wherein the impedance calculation unit (6d) is configured to calculate the impedance based on the element voltage, the element current, and the phase difference measured by the phase measurement unit (6c),
wherein a piezoelectric element (12) is used as the electromechanical conversion element (4),
wherein the power source (6e) is configured to drive the electromechanical conversion element (4) to vibrate at a vibration frequency that is a resonance frequency,
wherein the impedance calculation unit (6d) is configured to measure a resonance frequency of the electromechanical conversion element (4) based on a result of the measurement of the impedance of the electromechanical conversion element (4),
wherein the impedance calculation unit (6d) is configured to calculate the impedance every time the frequency of the power source (6e) is changed, based on the element voltage, the element current, and the phase difference measured by the phase measurement unit (6c).

2. The foreign substance detection device of claim 1,

wherein the foreign substance detection unit (6) further comprises:

- a storage unit (203) configured to store a table indicating a relationship between an amount of change in the impedance and an adhesion amount of the foreign substance; and
- a collation unit (202) configured to detect an adhesion amount of the foreign substance by collating an amount of change in the impedance calculated by the impedance calculation unit (6d) with the table stored in the storage unit (203).

3. The foreign substance detection device of claim 2,

wherein the foreign substance detection unit (6) further comprises a temperature measurement unit (302) configured to measure a temperature of the electromechanical conversion element (4),
wherein the storage unit (203) is configured to store, for each temperature measured by the temperature measurement unit (302), a table indicating a relationship between an amount of change in the impedance and an adhesion amount of the foreign substance, and
wherein the collation unit (202) is configured to detect an adhesion amount of the foreign substance by collating an amount of change in the impedance calculated by the impedance calculation unit (6d) with the table stored in the storage unit (203).

4. The foreign substance detection device of any one of claims 1-3,
wherein the power source (6e) is configured to drive the electromechanical conversion element (4) at a vibration frequency that is a lowest resonance frequency among a plurality of resonance frequencies.

5. A foreign substance detection device (100) for detecting a foreign substance adhered inside a pipe, comprising:

- an electromechanical conversion element (4), which is attached to an outside of the pipe (1), and is configured to convert electric energy to mechanical energy and convert mechanical energy to electric energy; and
- a foreign substance detection unit (6) configured to measure impedance of the electromechanical conversion element (4) to detect adhesion of a foreign substance inside the pipe (1),
the foreign substance detection unit (6) including:

- a power source (6e) configured to supply power to the electromechanical conversion element (4) to cause the electromechanical conversion element (4) to vibrate;
- a voltage measurement unit (6a) configured to measure an element voltage applied to the electromechanical conversion element (4) when power is supplied from the power source (6e);
- a current measurement unit (6b) configured to measure an element current flowing through the electromechanical conversion element (4) when power is supplied from the power source (6e);
- an impedance calculation unit (6d) configured to calculate the impedance based on the element voltage and the element current; and
- a detection unit (6g) configured to detect adhesion of a foreign substance inside the pipe (1) based on the impedance calculated by the impedance calculation unit (6d),

wherein the foreign substance detection unit (6) further comprises a phase measurement unit (6c) configured to measure a phase difference between the element voltage measured by the voltage measurement unit (6a) and the element current measured by the current measurement unit (6b), and
wherein the impedance calculation unit (6d) is configured to calculate the impedance based on the element voltage, the element current, and the phase difference measured by the phase measurement unit (6c),
wherein a piezoelectric element (12) is used as the electromechanical conversion element (4),
wherein the power source (6e) is configured to drive the electromechanical conversion element (4) at a vibration frequency that is an antiresonance frequency,
wherein the impedance calculation unit (6d) is configured to measure an antiresonance frequency of the electromechanical conversion element (4) based on a result of the measurement of the impedance of the electromechanical conversion element (4),
wherein the impedance calculation unit (6d) is configured to calculate the impedance every time the frequency of the power source (6e) is changed, based on the element voltage, the element current, and the phase difference measured by the phase measurement unit (6c).

6. The foreign substance detection device of claim 5,

wherein the power source (6e) is configured to drive the electromechanical conversion element (4) at a vibration frequency that is a lowest antiresonance frequency among a plurality of antiresonance frequencies.

7. The foreign substance detection device of any one of claims 5 to 6, further comprising:

    - a calculation unit (402) configured to calculate an electromechanical coupling coefficient based on a resonance frequency and an antiresonance frequency among vibration frequencies of the electromechanical conversion element (4); and
    - a determination unit (403) configured to determine failure of a device based on the electromechanical coupling coefficient calculated by the calculation unit (402).

8. The foreign substance detection device of any one of claims 5 to 7,
    wherein the power source (6e) is configured to drive the electromechanical conversion element (4) at a vibration frequency having a phase difference of almost zero degrees.

9. The foreign substance detection device of any one of claims 1 to 8,
    wherein the foreign substance detection unit (6) is configured to premeasure impedance when, before measuring impedance, the electromechanical conversion element (4) is removed and both electrodes of the foreign substance detection unit (6) are open-circuited and short-circuited.

10. A foreign substance detection method for detecting a foreign substance adhered inside a pipe, comprising:

    - measuring, when power is supplied from a power source (6e) to an electromechanical conversion element (4) that is attached to an outside of the pipe (1) and configured to convert electric energy to mechanical energy, and convert mechanical energy to electric energy, an element voltage applied to the electromechanical conversion element (4) and an element current flowing through the electromechanical conversion element (4);
    - calculating impedance based on the element voltage and the element current;
    - detecting adhesion of a foreign substance inside the pipe (1) based on the impedance;
    - measuring a phase difference between the element voltage and the element current,
    - calculating the impedance based on the element voltage, the element current, and the phase difference;
    - measuring a resonance frequency or an antiresonance frequency of the electromechanical conversion element (4) based on a result of the measurement of the impedance of the electromechanical conversion element (4);
    - calculating the impedance every time the frequency of the power source (6e) is changed, based on the element voltage, the element current, and the phase difference; and
    - driving the electromechanical conversion element (4) to vibrate at a vibration frequency that is a resonance frequency or an vibration frequency that is an antiresonance frequency;

    wherein a piezoelectric element (12) is used as the electromechanical conversion element (4).

**Patentansprüche**

1. Fremdstofferkennungsvorrichtung (100) zum Erkennen eines Fremdstoffs, der innen in einem Rohr (1) haftet, umfassend:

    - ein elektromechanisches Umwandlungselement (4), das an einer Außenseite des Rohrs (1) befestigt ist und dazu konfiguriert ist, elektrische Energie in mechanische Energie umzuwandeln und mechanische Energie in elektrische Energie umzuwandeln; und
    - eine Fremdstofferkennungseinheit (6), die dazu konfiguriert ist, eine Impedanz des elektromechanischen Umwandlungselements (4) zu messen, um eine Haftung eines Fremdstoffs innen in dem Rohr (1) zu erkennen, wobei die Fremdstofferkennungseinheit (6) Folgendes beinhaltet:

        - eine Leistungsquelle (6e), die dazu konfiguriert ist, dem elektromechanischen Umwandlungselement (4) Leistung zuzuführen, um zu veranlassen, dass das elektromechanische Umwandlungselement (4) vibriert;
        - eine Spannungsmesseinheit (6a), die dazu konfiguriert ist, eine Elementspannung zu messen, die an das elektromechanische Umwandlungselement (4) angelegt wird, wenn Leistung von der Leistungsquelle (6e) zugeführt wird;
        - eine Strommesseinheit (6b), die dazu konfiguriert ist, einen Elementstrom zu messen, der durch das elektromechanische Umwandlungselement (4) fließt, wenn Leistung von der Leistungsquelle (6e) zugeführt wird;
- eine Impedanzberechnungseinheit (6d), die dazu konfiguriert ist, die Impedanz basierend auf der Elementspannung und dem Elementstrom zu berechnen; und
- eine Erkennungseinheit (6g), die dazu konfiguriert ist, eine Haftung eines Fremdstoffs innen in dem Rohr (1) basierend auf der Impedanz zu erkennen, die durch die Impedanzberechnungseinheit (6d) berechnet wird,

wobei die Fremdstofferkennungseinheit (6) ferner eine Phasenmesseinheit (6c) umfasst, die dazu konfiguriert ist, eine Phasendifferenz zwischen der Elementspannung, die durch die Spannungsmesseinheit (6a) gemessen wird, und dem Elementstrom, der durch die Strommesseinheit (6b) gemessen wird, zu messen, und
wobei die Impedanzberechnungseinheit (6d) dazu konfiguriert ist, die Impedanz basierend auf der Elementspannung, dem Elementstrom und der Phasendifferenz, die durch die Phasenmesseinheit (6c) gemessen wird, zu berechnen,
wobei ein piezoelektrisches Element (12) als das elektromechanische Umwandlungselement (4) verwendet wird,
wobei die Leistungsquelle (6e) dazu konfiguriert ist, das elektromechanische Umwandlungselement (4) dazu anzutreiben, mit einer Vibrationsfrequenz zu vibrieren, bei der es sich um eine Resonanzfrequenz handelt,
wobei die Impedanzberechnungseinheit (6d) dazu konfiguriert ist, eine Resonanzfrequenz des elektromechanischen Umwandlungselements (4) basierend auf einem Ergebnis der Messung der Impedanz des elektromechanischen Umwandlungselements (4) zu messen,
wobei die Impedanzberechnungseinheit (6d) dazu konfiguriert ist, die Impedanz jedes Mal, wenn sich die Frequenz der Leistungsquelle (6e) ändert, basierend auf der Elementspannung, dem Elementstrom und der Phasendifferenz, die durch die Phasenmesseinheit (6c) gemessen wird, zu berechnen.

2. Fremdstofferkennungsvorrichtung nach Anspruch 1,
wobei die Fremdstofferkennungseinheit (6) ferner Folgendes umfasst:

- eine Speichereinheit (203), die dazu konfiguriert ist, eine Tabelle zu speichern, die eine Beziehung zwischen einem Ausmaß einer Änderung der Impedanz und einem Haftungsausmaß des Fremdstoffs anzeigt; und
- eine Abgleichungseinheit (202), die dazu konfiguriert ist, ein Haftungsausmaß des Fremdstoffs durch Abgleichen eines Ausmaßes einer Änderung der Impedanz, die durch die Impedanzberechnungseinheit (6d) berechnet wird, mit der Tabelle, die in der Speichereinheit (203) gespeichert ist, zu erkennen.

3. Fremdstofferkennungsvorrichtung nach Anspruch 2,

wobei die Fremdstofferkennungseinheit (6) ferner eine Temperaturmesseinheit (302) umfasst, die dazu konfiguriert ist, eine Temperatur des elektromechanischen Umwandlungselements (4) zu messen,
wobei die Speichereinheit (203) dazu konfiguriert ist, für jede Temperatur, die durch die Temperaturmesseinheit (302) gemessen wird, eine Tabelle zu speichern, die eine Beziehung zwischen einem Ausmaß einer Änderung der Impedanz und einem Haftungsausmaß des Fremdstoffs anzeigt, und
wobei die Abgleichungseinheit (202) dazu konfiguriert ist, ein Haftungsausmaß des Fremdstoffs durch Abgleichen eines Ausmaßes einer Änderung der Impedanz, die durch die Impedanzberechnungseinheit (6d) berechnet wird, mit der Tabelle, die in der Speichereinheit (203) gespeichert ist, zu erkennen.

4. Fremdstofferkennungsvorrichtung nach einem der Ansprüche 1-3,
wobei die Leistungsquelle (6e) dazu konfiguriert ist, das elektromechanische Umwandlungselement (4) mit einer Vibrationsfrequenz anzutreiben, bei der es sich um eine niedrigste Resonanzfrequenz aus einer Vielzahl von Resonanzfrequenzen handelt.

5. Fremdstofferkennungsvorrichtung (100) zum Erkennen eines Fremdstoffs, der innen in einem Rohr haftet, umfassend:

- ein elektromechanisches Umwandlungselement (4), das an einer Außenseite des Rohrs (1) befestigt ist und dazu konfiguriert ist, elektrische Energie in mechanische Energie umzuwandeln und mechanische Energie in elektrische Energie umzuwandeln; und
- eine Fremdstofferkennungseinheit (6), die dazu konfiguriert ist, eine Impedanz des elektromechanischen Umwandlungselements (4) zu messen, um eine Haftung eines Fremdstoffs innen in dem Rohr (1) zu erkennen, wobei die Fremdstofferkennungseinheit (6) Folgendes beinhaltet:

- eine Leistungsquelle (6e), die dazu konfiguriert ist, dem elektromechanischen Umwandlungselement (4) Leistung zuzuführen, um zu veranlassen, dass das elektromechanische Umwandlungselement (4) vibriert;
- eine Spannungsmesseinheit (6a), die dazu konfiguriert ist, eine Elementspannung zu messen, die an das elektromechanische Umwandlungselement (4) angelegt wird, wenn Leistung von der Leistungsquelle (6e) zugeführt wird;
- eine Strommesseinheit (6b), die dazu konfiguriert ist, einen Elementstrom zu messen, der durch das elektromechanische Umwandlungselement (4) fließt, wenn Leistung von der Leistungsquelle (6e) zugeführt wird;
- eine Impedanzberechnungseinheit (6d), die dazu konfiguriert ist, die Impedanz basierend auf der Elementspannung und dem Elementstrom zu berechnen; und
- eine Erkennungseinheit (6g), die dazu konfiguriert ist, eine Haftung eines Fremdstoffs innen in dem Rohr (1) basierend auf der Impedanz zu erkennen, die durch die Impedanzberechnungseinheit (6d) berechnet wird,

wobei die Fremdstofferkennungseinheit (6) ferner eine Phasenmesseinheit (6c) umfasst, die dazu konfiguriert ist, eine Phasendifferenz zwischen der Elementspannung, die durch die Spannungsmesseinheit (6a) gemessen wird, und dem Elementstrom, der durch die Strommesseinheit (6b) gemessen wird, zu messen, und

wobei die Impedanzberechnungseinheit (6d) dazu konfiguriert ist, die Impedanz basierend auf der Elementspannung, dem Elementstrom und der Phasendifferenz, die durch die Phasenmesseinheit (6c) gemessen wird, zu berechnen,

wobei ein piezoelektrisches Element (12) als das elektromechanische Umwandlungselement (4) verwendet wird,

wobei die Leistungsquelle (6e) dazu konfiguriert ist, das elektromechanische Umwandlungselement (4) mit einer Vibrationsfrequenz anzutreiben, bei der es sich um eine Antiresonanzfrequenz handelt,

wobei die Impedanzberechnungseinheit (6d) dazu konfiguriert ist, eine Antiresonanzfrequenz des elektromechanischen Umwandlungselements (4) basierend auf einem Ergebnis der Messung der Impedanz des elektromechanischen Umwandlungselements (4) zu messen,

wobei die Impedanzberechnungseinheit (6d) dazu konfiguriert ist, die Impedanz jedes Mal, wenn sich die Frequenz der Leistungsquelle (6e) ändert, basierend auf der Elementspannung, dem Elementstrom und der Phasendifferenz, die durch die Phasenmesseinheit (6c) gemessen wird, zu berechnen.

6. Fremdstofferkennungsvorrichtung nach Anspruch 5,
wobei die Leistungsquelle (6e) dazu konfiguriert ist, das elektromechanische Umwandlungselement (4) mit einer Vibrationsfrequenz anzutreiben, bei der es sich um eine niedrigste Antiresonanzfrequenz aus einer Vielzahl von Antiresonanzfrequenzen handelt.

7. Fremdstofferkennungsvorrichtung nach einem der Ansprüche 5 bis 6, ferner umfassend:

- eine Berechnungseinheit (402), die dazu konfiguriert ist, einen elektromechanischen Kopplungskoeffizienten basierend auf einer Resonanzfrequenz und einer Antiresonanzfrequenz aus Vibrationsfrequenzen des elektromechanischen Umwandlungselements (4) zu berechnen; und
- eine Bestimmungseinheit (403), die dazu konfiguriert ist, einen Ausfall einer Vorrichtung basierend auf dem elektromechanischen Kopplungskoeffizienten zu bestimmen, der durch die Berechnungseinheit (402) berechnet wird.

8. Fremdstofferkennungsvorrichtung nach einem der Ansprüche 5 bis 7,
wobei die Leistungsquelle (6e) dazu konfiguriert ist, das elektromechanische Umwandlungselement (4) mit einer Vibrationsfrequenz anzutreiben, die eine Phasendifferenz von fast null Grad aufweist.

9. Fremdstofferkennungsvorrichtung nach einem der Ansprüche 1 bis 8,
wobei die Fremdstofferkennungseinheit (6) dazu konfiguriert ist, die Impedanz vorab zu messen, wenn das elektromechanische Umwandlungselement (4) vor dem Messen der Impedanz entfernt wird und beide Elektroden der Fremdstofferkennungseinheit (6) unterbrochen und kurzgeschlossen sind.

10. Fremdstofferkennungsverfahren zum Erkennen eines Fremdstoffs, der innen in einem Rohr haftet, umfassend:

- Messen, wenn eine Leistung von einer Leistungsquelle (6e) einem elektromechanischen Umwandlungselement (4) zugeführt wird, das an einer Außenseite des Rohrs (1) befestigt ist und dazu konfiguriert ist, elektrische Energie in mechanische Energie umzuwandeln und mechanische Energie in elektrische Energie umzuwandeln, einer Elementspannung, die an das elektromechanische Umwandlungselement (4) angelegt wird, und eines Elementstroms, der durch das elektromechanische Umwandlungselement (4) fließt;
- Berechnen einer Impedanz basierend auf der Elementspannung und dem Elementstrom;
- Erkennen einer Haftung eines Fremdstoffs innen in dem Rohr (1) basierend auf der Impedanz;
- Messen einer Phasendifferenz zwischen der Elementspannung und dem Elementstrom,
- Berechnen der Impedanz basierend auf der Elementspannung, dem Elementstrom und der Phasendifferenz;
- Messen einer Resonanzfrequenz oder einer Antiresonanzfrequenz des elektromechanischen Umwandlungselements (4) basierend auf einem Ergebnis der Messung der Impedanz des elektromechanischen Umwandlungselements (4);
- Berechnen der Impedanz jedes Mal, wenn sich die Frequenz der Leistungsquelle (6e) ändert, basierend auf der Elementspannung, dem Elementstrom und der Phasendifferenz; und
- Antreiben des elektromechanischen Umwandlungselements (4) dazu, mit einer Vibrationsfrequenz, bei der es sich um eine Resonanzfrequenz handelt, oder mit einer Vibrationsfrequenz, bei der es sich um eine Antiresonanzfrequenz handelt, zu vibrieren;

wobei ein piezoelektrisches Element (12) als das elektromechanische Umwandlungselement (4) verwendet wird.

## Revendications

1. Dispositif de détection de substance étrangère (100) pour détecter une substance étrangère adhérant à l'intérieur d'un tuyau (1), comprenant :

   - un élément de conversion électromécanique (4), qui est fixé à un extérieur du tuyau (1), et est configuré pour convertir l'énergie électrique en énergie mécanique et convertir l'énergie mécanique en énergie électrique ; et
   - une unité de détection de substance étrangère (6) configurée pour mesurer l'impédance de l'élément de conversion électromécanique (4) pour détecter l'adhérence d'une substance étrangère à l'intérieur du tuyau (1), l'unité de détection de substance étrangère (6) incluant :

      - une source d'alimentation (6e) configurée pour alimenter l'élément de conversion électromécanique (4) pour faire vibrer l'élément de conversion électromécanique (4) ;
      - une unité de mesure de tension (6a) configurée pour mesurer une tension d'élément appliquée à l'élément de conversion électromécanique (4) lorsqu'il est alimenté par la source d'alimentation (6e) ;
      - une unité de mesure de courant (6b) configurée pour mesurer un courant d'élément circulant à travers l'élément de conversion électromécanique (4) lorsqu'il est alimenté par la source d'alimentation (6e) ;
      - une unité de calcul d'impédance (6d) configurée pour calculer l'impédance sur la base de la tension d'élément et du courant d'élément ; et
      - une unité de détection (6g) configurée pour détecter l'adhérence d'une substance étrangère à l'intérieur du tuyau (1) sur la base de l'impédance calculée par l'unité de calcul d'impédance (6d),

   dans lequel l'unité de détection de substance étrangère (6) comprend en outre une unité de mesure de phase (6c) configurée pour mesurer une différence de phase entre la tension d'élément mesurée par l'unité de mesure de tension (6a) et le courant d'élément mesuré par l'unité de mesure de courant (6b), et
   dans lequel l'unité de calcul d'impédance (6d) est configurée pour calculer l'impédance sur la base de la tension d'élément, du courant d'élément, et de la différence de phase mesurée par l'unité de mesure de phase (6c),
   dans lequel un élément piézoélectrique (12) est utilisé comme élément de conversion électromécanique (4),
   dans lequel la source d'alimentation (6e) est configurée pour entraîner l'élément de conversion électromécanique (4) pour qu'il vibre à une fréquence de vibration qui est une fréquence de résonance,
   dans lequel l'unité de calcul d'impédance (6d) est configurée pour mesurer une fréquence de résonance de l'élément de conversion électromécanique (4) sur la base d'un résultat de la mesure de l'impédance de l'élément de conversion électromécanique (4),
   dans lequel l'unité de calcul d'impédance (6d) est configurée pour calculer l'impédance chaque fois que la fréquence de la source d'alimentation (6e) est changée, sur la base de la tension d'élément, du courant d'élément, et de la différence de phase mesurée par l'unité de mesure de phase (6c).

2. Dispositif de détection de substance étrangère selon la revendication 1, dans lequel l'unité de détection de substance étrangère (6) comprend en outre :

- une unité de stockage (203) configurée pour stocker un tableau indiquant une relation entre une quantité de changement dans l'impédance et une quantité d'adhérence de la substance étrangère ; et
- une unité de collationnement (202) configurée pour détecter une quantité d'adhérence de la substance étrangère en collationnant une quantité de changement dans l'impédance calculée par l'unité de calcul d'impédance (6d) avec le tableau stocké dans l'unité de stockage (203).

3. Dispositif de détection de substance étrangère selon la revendication 2,

dans lequel l'unité de détection de substance étrangère (6) comprend en outre une unité de mesure de température (302) configurée pour mesurer une température de l'élément de conversion électromécanique (4), dans lequel l'unité de stockage (203) est configurée pour stocker, pour chaque température mesurée par l'unité de mesure de température (302), un tableau indiquant une relation entre une quantité de changement dans l'impédance et une quantité d'adhérence de la substance étrangère, et
dans lequel l'unité de collationnement (202) est configurée pour détecter une quantité d'adhérence de la substance étrangère en collationnant une quantité de changement dans l'impédance calculée par l'unité de calcul d'impédance (6d) avec le tableau stocké dans l'unité de stockage (203).

4. Dispositif de détection de substance étrangère selon l'une quelconque des revendications 1 à 3,
dans lequel la source d'alimentation (6e) est configurée pour entraîner l'élément de conversion électromécanique (4) à une fréquence de vibration qui est une fréquence de résonance la plus basse parmi une pluralité de fréquences de résonance.

5. Dispositif de détection de substance étrangère (100) pour détecter une substance étrangère adhérant à l'intérieur d'un tuyau, comprenant :

- un élément de conversion électromécanique (4), qui est fixé à un extérieur du tuyau (1), et est configuré pour convertir l'énergie électrique en énergie mécanique et convertir l'énergie mécanique en énergie électrique ; et
- une unité de détection de substance étrangère (6) configurée pour mesurer l'impédance de l'élément de conversion électromécanique (4) pour détecter l'adhérence d'une substance étrangère à l'intérieur du tuyau (1), l'unité de détection de substance étrangère (6) incluant :

- une source d'alimentation (6e) configurée pour alimenter l'élément de conversion électromécanique (4) pour faire vibrer l'élément de conversion électromécanique (4) ;
- une unité de mesure de tension (6a) configurée pour mesurer une tension d'élément appliquée à l'élément de conversion électromécanique (4) lorsqu'il est alimenté par la source d'alimentation (6e) ;
- une unité de mesure de courant (6b) configurée pour mesurer un courant d'élément circulant à travers l'élément de conversion électromécanique (4) lorsqu'il est alimenté par la source d'alimentation (6e) ;
- une unité de calcul d'impédance (6d) configurée pour calculer l'impédance sur la base de la tension d'élément et du courant d'élément ; et
- une unité de détection (6g) configurée pour détecter l'adhérence d'une substance étrangère à l'intérieur du tuyau (1) sur la base de l'impédance calculée par l'unité de calcul d'impédance (6d),

dans lequel l'unité de détection de substance étrangère (6) comprend en outre une unité de mesure de phase (6c) configurée pour mesurer une différence de phase entre la tension d'élément mesurée par l'unité de mesure de tension (6a) et le courant d'élément mesuré par l'unité de mesure de courant (6b), et
dans lequel l'unité de calcul d'impédance (6d) est configurée pour calculer l'impédance sur la base de la tension d'élément, du courant d'élément, et de la différence de phase mesurée par l'unité de mesure de phase (6c),
dans lequel un élément piézoélectrique (12) est utilisé comme élément de conversion électromécanique (4),
dans lequel la source d'alimentation (6e) est configurée pour entraîner l'élément de conversion électromécanique (4) à une fréquence de vibration qui est une fréquence d'antirésonance,
dans lequel l'unité de calcul d'impédance (6d) est configurée pour mesurer une fréquence d'antirésonance de l'élément de conversion électromécanique (4) sur la base d'un résultat de la mesure de l'impédance de l'élément de conversion électromécanique (4),
dans lequel l'unité de calcul d'impédance (6d) est configurée pour calculer l'impédance chaque fois que la fréquence de la source d'alimentation (6e) est changée, sur la base de la tension d'élément, du courant d'élément et de la différence de phase mesurée par l'unité de mesure de phase (6c).

**6.** Dispositif de détection de substance étrangère selon la revendication 5,
dans lequel la source d'alimentation (6e) est configurée pour entraîner l'élément de conversion électromécanique (4) à une fréquence de vibration qui est une fréquence d'antirésonance la plus basse parmi une pluralité de fréquences d'antirésonance.

**7.** Dispositif de détection de substance étrangère selon l'une quelconque des revendications 5 et 6, comprenant en outre :

- une unité de calcul (402) configurée pour calculer un coefficient de couplage électromécanique sur la base d'une fréquence de résonance et d'une fréquence d'antirésonance parmi des fréquences de vibration de l'élément de conversion électromécanique (4) ; et
- une unité de détermination (403) configurée pour déterminer une défaillance d'un dispositif sur la base du coefficient de couplage électromécanique calculé par l'unité de calcul (402).

**8.** Dispositif de détection de substance étrangère selon l'une quelconque des revendications 5 à 7,
dans lequel la source d'alimentation (6e) est configurée pour entraîner l'élément de conversion électromécanique (4) à une fréquence de vibration ayant une différence de phase de presque zéro degré.

**9.** Dispositif de détection de substance étrangère selon l'une quelconque des revendications 1 à 8,
dans lequel l'unité de détection de substance étrangère (6) est configurée pour prémesurer l'impédance lorsque, avant de mesurer l'impédance, l'élément de conversion électromécanique (4) est retiré et que les deux électrodes de l'unité de détection de substance étrangère (6) sont en circuit ouvert et en court-circuit.

**10.** Procédé de détection de substance étrangère pour détecter une substance étrangère adhérant à l'intérieur d'un tuyau, comprenant :

- la mesure, lorsque l'alimentation est fournie par une source d'alimentation (6e) à un élément de conversion électromécanique (4) qui est fixé à un extérieur du tuyau (1) et configuré pour convertir l'énergie électrique en énergie mécanique, et convertir l'énergie mécanique en énergie électrique, d'une tension d'élément appliquée à l'élément de conversion électromécanique (4) et d'un courant d'élément circulant à travers l'élément de conversion électromécanique (4) ;
- le calcul d'impédance sur la base de la tension d'élément et du courant d'élément ;
- la détection de l'adhérence d'une substance étrangère à l'intérieur du tuyau (1) sur la base de l'impédance ;
- la mesure d'une différence de phase entre la tension d'élément et le courant d'élément,
- le calcul de l'impédance sur la base de la tension d'élément, du courant d'élément et de la différence de phase ;
- la mesure d'une fréquence de résonance ou d'une fréquence d'antirésonance de l'élément de conversion électromécanique (4) sur la base d'un résultat de la mesure de l'impédance de l'élément de conversion électromécanique (4) ;
- le calcul de l'impédance chaque fois que la fréquence de la source d'alimentation (6e) est changée, sur la base de la tension d'élément, du courant d'élément et de la différence de phase ; et
- le fait d'entraîner l'élément de conversion électromécanique (4) pour qu'il vibre à une fréquence de vibration qui est une fréquence de résonance ou une fréquence de vibration qui est une fréquence d'antirésonance ;

dans lequel un élément piézoélectrique (12) est utilisé comme élément de conversion électromécanique (4).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**FIG. 15**

**FIG. 16**

FIG. 17

DIRECTION OF
REFRIGERANT FLOW

FIG. 18

FIG. 19

FIG. 20

FIG. 21

FIG. 22

FIG. 23

FIG. 24

FIG. 25

FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011303012 A1
- WO 0131329 A1
- JP HEI9287937 A
- JP 2007010543 A